(19) **Europäisches Patentamt**
**European Patent Office**
**Office européen des brevets**

(11) **EP 3 356 423 B1**

(12) **EUROPÄISCHE PATENTSCHRIFT**

(45) Veröffentlichungstag und Bekanntmachung des Hinweises auf die Patenterteilung:
**12.01.2022  Patentblatt 2022/02**

(51) Int Cl.:
*C08F 2/00* (2006.01)       *C08F 2/26* (2006.01)
*C08F 265/04* (2006.01)     *C08F 6/14* (2006.01)
*C08L 25/12* (2006.01)

(21) Anmeldenummer: **16775602.2**

(22) Anmeldetag: **23.09.2016**

(86) Internationale Anmeldenummer:
**PCT/EP2016/072647**

(87) Internationale Veröffentlichungsnummer:
**WO 2017/055179 (06.04.2017 Gazette 2017/14)**

(54) **VERFAHREN ZUR HERSTELLUNG VON ACRYLATKAUTSCHUK BEI REDUZIERTER EMULGATORKONZENTRATION**

METHOD FOR PRODUCING ACRYLATE RUBBER AT REDUCED EMULSIFIER CONCENTRATION

PROCÉDÉ POUR FABRIQUER DU CAOUTCHOUC À BASE D'ACRYLATE AVEC UNE CONCENTRATION RÉDUITE D'ÉMULSIFIANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2015  EP 15187635**

(43) Veröffentlichungstag der Anmeldung:
**08.08.2018  Patentblatt 2018/32**

(73) Patentinhaber: **INEOS Styrolution Group GmbH 60325 Frankfurt (DE)**

(72) Erfinder:
• **FISCHER, Wolfgang**
**69124 Heidelberg (DE)**

• **SCHULZ, Tobias**
**51103 Köln (DE)**

(74) Vertreter: **Jacobi, Markus Alexander Patentanwälte Isenbruck Bösl Hörschler PartG mbB Eastsite One Seckenheimer Landstraße 4 68163 Mannheim (DE)**

(56) Entgegenhaltungen:
**EP-A2- 0 450 485       WO-A1-2015/150223**
**DE-A1- 19 623 416      KR-A- 20090 038 507**

**Beschreibung**

Die vorliegende Erfindung betrifft ein optimiertes Herstellungsverfahren für Acrylat-Kautschuke. Das Verfahren erfolgt durch Emulsionspolymerisation und kann durch den Einsatz eines verbesserten Puffersystems bei der Pfropfcopolymer-Herstellung optimiert werden. Dadurch kann die Menge an Emulgator, die notwendig ist, um eine ausreichend stabile Latexsuspension bzw. Latexdispersion (nachfolgend auch als Polymerlatex L bezeichnet) zu erhalten, signifikant reduziert werden. Das hat u.a. eine höhere Reinheit der Produkte und eine geringere Belastung des Abwassers zur Folge.

Die Herstellung von Copolymeren aus Styrol- und Nitril-Monomeren (Hartkomponente) ist dem Fachmann bekannt. So wird die Herstellung von Styrol-Acrylnitril-Copolymeren (SAN) in US 8440764 sowie bereits im Kunststoff-Handbuch (Vieweg-Daumiller, Band V Polystyrol, Carl-Hanser-Verlag, München, 1969, Seite 124) beschrieben.

Die Herstellung von Pfropf-Copolymeren unter Einsatz eines Kautschuks (Pfropfcopolymers) wird in EP-A 0450485, DE 19503545 und DE 3149358 offenbart. Die Herstellung von SAN-Copolymer-Formmassen mit mindestens einem Acrylat-Kautschuk wird in US 2011/0275763 vorgestellt. WO 2007/142473 beschreibt Acrynitril-Styrol-Acrylat-Copolymere (ASA) und deren Einsatz in thermoplastischen Zusammensetzungen.

Die Auswirkungen verschiedener Parameter auf die Koagulat-Bildung in der VorEmulsion bei der Herstellung von Acrylkautschuken werden von Palma et al. (Indian J. Chem. Technol. 2007, 14(5), 515) beschrieben. Es wird dargestellt, dass die Koagulat-Bildung bei einer Monomer-Zugabe bis zu vier Stunden leicht abnimmt, wohingegen bei einer Monomer-Zugabe über sechs Stunden die Koagulatbildung dramatisch zunimmt.

Zubitur et al. (Polymer 2001, 42(14), 5979) untersuchten die Effekte der Rührstufe, zeitlichen Monomer-Zugabe, Initiationsrate und der Kautschuk-Viskosität auf die Koagulatbildung bei der Emulsionspolymerisation von Styrol und Butylacrylat. Die Untersuchungen zeigen, dass unter thermaler Initiation eine langsamere unmittelbare Monomer-Umsetzung stattfindet, und eine Mindest-Rührstufe verwendet werden muss, um eine Koagulatbildung zu vermeiden.

Die Redox-Initiation (unter Einsatz eines Redox-Initiatorsystems) verläuft hingegen rascher, weshalb die Rührstufe eine noch wichtigere Rolle einnimmt, um eine Koagulatbildung zu verhindern. Daneben wird gezeigt, dass die Koagulatbildung mit der Viskosität der Reaktionsmischung zunimmt.

Üblicherweise werden bei Emulsionspolymerisationsverfahren Puffersubstanzen eingesetzt, um die pH-Werte der Reaktionsgemische auf die gewünschten Werte einzustellen. Häufig werden hierzu beispielsweise Natriumhydrogencarbonat oder Natriumpyrophosphat als Puffersubstanzen verwendet (vgl. US 4,634,734 oder US 6,177,517).

Die Einstellung der Reaktionsparameter ist im industriellen Maßstab bislang oftmals nicht zufriedenstellend und kann mit unerwünschten Nebenreaktionen einhergehen. Darüber hinaus ist es aufgrund strenger werdender ökologischer Anforderungen an die Abwässer industrieller chemischer Anlagen notwendig, die Belastung der Abwässer mit Chemikalien zu reduzieren. Somit besteht ein Bedarf für ein optimiertes Verfahren zur Herstellung von thermoplastischen Formmassen mit Acrylkautschuken mit geringer Emulgatorkonzentration.

Ein Gegenstand der Erfindung ist ein optimierter Herstellungsprozess, der es erlaubt, die Emulgatorkonzentration bei der Emulsionspolymerisation des Acrylkautschuks zu reduzieren, ohne dass hierdurch die Teilchengröße der Latexteilchen (bzw. deren Verteilung) oder die Stabilität der Latexdispersion negativ beeinflusst wird. Diese Stabilität wird nachfolgend auch als Latex-Stabilität bezeichnet. Sie kann mit Hilfe des sog. Klaxon-Verfahrens bestimmt werden. Beim Klaxon-Verfahren wird ein Polymerlatex durch Rühren mit einer flachen Scheibe bei hoher Drehzahl gezielt zur Koagulation gebracht und die Dauer bis zum Eintreten der Koagulation bestimmt.

Der erhaltene Polymerlatex L zeichnet sich durch eine geringe Koagulat-Bildungstendenz aus. Bei der erfindungsgemäßen Herstellung des Pfropfcopolymers (insbesondere ASA) bzw. der Pfropfcopolymere erfolgt die Polymerisation unter Einsatz mindestens eines Initiators, oftmals des Initiators Kaliumperoxodisulfat (KPS).

Die Erfindung betrifft insbesondere ein Verfahren zur Herstellung einer thermoplastischen Formmasse, enthaltend folgende Komponenten:

10 bis 40 Gew.-%, oftmals 20 bis 39,9 Gew.-% mindestens eines Pfropfcopolymers A, enthaltend

50 bis 70 Gew.-%, bezogen auf A, einer Pfropfgrundlage A1 aus einem elastomeren, vernetzten Acrylester-Polymer und
30 bis 50 Gew.-%, bezogen auf A, einer Pfropfhülle A2 aus einem vinylaromatischen Monomer und einem polaren, copolymerisierbaren, ethylenisch ungesättigten Monomeren, im Gewichtsverhältnis 80 : 20 bis 65 : 35,
50 bis 90 Gew.-%, oftmals 60 bis 89,9 Gew.-%, mindestens einer Hartmatrix B aus einem oder mehreren Copolymeren von Styrol, $\alpha$-Methylstyrol, Acrylnitril, Methylmethacrylat und/oder Phenylmaleinimid; insbesondere aus Styrol und Acrylnitril,

0 bis 40 Gew.-%, oftmals 1 bis 40 Gew.-%, mindestens eines weiteren, zum Pfropfcopolymer A unterschiedlichen Pfropfcopolymers C mit einem mittleren Teilchendurchmesser (Gewichtsmittel) im Bereich von 200 bis 800 nm, enthaltend

50 bis 80 Gew.-%, bezogen auf C, eines von A1 verschiedenen, elastomeren vernetzten Acrylester-Polymers C1, 2,5 bis 25 Gew.-%, oftmals 5 bis 25 Gew.-%, bezogen auf C, einer ersten Pfropfhülle C2 aus einem vinylaromatischen Monomeren und aus 10 bis 45 Gew.-%, oftmals 15 bis 40 Gew.-%, bezogen auf C, einer zweiten Pfropfhülle C3 aus einer Mischung aus einem vinylaromatischen Monomeren C31 und einem polaren, copolymerisierbaren, ethylenisch ungesättigten Monomeren C32 im Gewichtsverhältnis von C31 zu C32 von 90 : 10 bis 60 : 40 und

0 bis 15 Gew.-%, oftmals 0,1 bis 5 Gew.-%, eines oder mehrerer Additive D,

wobei die Summe aus A und B, und gegebenenfalls C und D, 100 Gew.-% ergibt, und

wobei die Reaktion zur Herstellung des Pfropfcopolymers A und die Reaktion zur Herstellung des Pfropfcopolymers C in Gegenwart einer 0,01 bis 4-fach molaren Menge an Natriumcarbonat, bezogen auf die Summe der bei der Herstellung der Pfropfgrundlage und Pfropfhülle eingesetzten molaren Menge an Initiator, insbesondere KPS, durchgeführt wird, und

wobei die Reaktion zur Herstellung des Pfropfcopolymers A und die Reaktion zur Herstellung des Pfropfcopolymers C in Gegenwart von 0,1 bis 1 Gew.-% eines Emulgators, insbesondere eines Alkalimetall-Alkylsulfonats, bezogen auf die Menge der jeweils eingesetzten Monomere, durchgeführt wird, und

wobei dem Reaktionsgemisch zur Herstellung des Pfropfcopolymers A und des Pfropfcopolymers C während der Polymerisationsreaktion, während der Nachpolymerisation und/oder nach der Polymerisationsreaktion Wasser oder eine wässrige alkalische Lösung zugegeben wird.

Die Menge des eingesetzten Initiators (insbesondere KPS) beträgt bei jedem der Polymerisationsschritte in der Regel von 0,05 bis 1,2 Gew.-%, insbesondere von 0,1 bis 0,6 Gew.-%, bezogen auf das Gewicht der eingesetzten Monomere. Ein Initiator kommt jedoch stets zum Einsatz.

Über den Zeitpunkt und die Menge an zugegebenem Natriumcarbonat und Emulgator kann bei der Herstellung der Pfropfcopolymere A und C die gewünschte Teilchengröße des Pfropfcopolymers eingestellt werden. So kann durch die Wahl einer geeigneten Menge an Natriumcarbonat, die Emulgatormenge signifikant reduziert werden, ohne dass sich hierdurch die Teilchengröße der Pfropfcopolymere ändert (insbesondere im Vergleich zu herkömmlichen Polymerisationssystemen, die Natriumhydrogencarbonat als Puffersubstanz verwenden).

Eine reduzierte Menge an Emulgator im Reaktionsgemisch hat sowohl wirtschaftliche als auch ökologische Vorteile. Die Abwässer enthalten dadurch weniger Emulgator und müssen weniger aufwendig gereinigt werden. Auch die Produkte sind weniger mit Emulgator-Rückständen belastet. Zudem werden geringere Mengen an Fällungsmittel benötigt, sodass die Kosten für die Komponenten, wie Emulgatoren und Fällungsmittel reduziert werden können.

Es ist bekannt, dass die Reduzierung der Emulgatorkonzentration in einem der Schritte zur Herstellung der Pfropfcopolymere A bzw. C zu einer geringeren Stabilität des erhaltenen Polymerlatex L führen kann. Dies hat eine rasche Agglomeration der Latexteilchen zur Folge. Eine Lagerung des Polymerlatex L ist somit nicht möglich. Es wurde jedoch gefunden, dass die Zugaben von Wasser oder einer wässrigen alkalischen Lösung überraschenderweise eine Erhöhung der Stabilität des Polymerlatex L bewirkt. Dieser Effekt war aufgrund der bisherigen Erkenntnisse für den Fachmann nicht zu erwarten (vgl. DE-A 10 2008 009 390). Die Lagerungsfähigkeit der Polymer-Latices ist jedoch technisch von Bedeutung.

Die Zugabe von Wasser oder einer wässrigen alkalischen Lösung kann erfindungsgemäß während oder nach der Durchführung der Polymerisationsreaktion stattfinden. In einer Ausführungsform der Erfindung findet die Zugabe während der Polymerisationsreaktion zur Herstellung der Pfropfgrundlage A1 bzw. C1 statt, beispielsweise nachdem 50 Gew-% der Monomere, insbesondere 75 Gew-% der Monomere zu der Polymerisationsreaktion dosiert wurden. In einer bevorzugten Ausführungsform findet die Zugabe von Wasser oder einer wässrigen alkalischen Lösung statt, nachdem die gesamte umzusetzende Monomermenge zugegeben wurde.

Die Zugabe von Wasser oder wässriger alkalischer Lösung erfolgt somit vorzugsweise während des Nachpolymerisationsschritts, im direkten Anschluss an die Monomerzugabe oder im Anschluss an den Nachpolymerisationsschritt nach der Beendigung der Polymerisationsreaktion. Ein bevorzugter Gegenstand der Erfindung ist somit ein Verfahren, bei dem Wasser oder eine wässrige alkalische Lösung zugegeben wird, nachdem die Monomerzugabe beendet ist.

Durch die erfindungsgemäße Zugabe von Wasser oder einer wässrigen alkalischen Lösung wird die mittels des Klaxon-Tests ermittelte Stabilität des erhaltenen Polymerlatex signifikant erhöht. Die Bildung von Koagulat bei der Lagerung wird dadurch reduziert. Dieser Effekt kann für jedes Polymerlatex, welches in dem erfindungsgemäßen Herstellungsverfahren zur Verfahren zur Herstellung der Pfropfcopolymere A bzw. C gebildet wird, durch die Zugabe von Wasser oder einer wässrigen alkalischen Lösung erzielt werden.

Insbesondere vorteilhaft ist die Zugabe von Wasser oder einer wässrigen alkalischen Lösung bei der Herstellung der kleinteiligen Pfropfgrundlage A1 (Polymerlatex L(A1)), bei der Herstellung des kleinteiligen Pfropfcopolymers A durch Aufpfropfen der Pfropfhülle A2 auf die Pfropfgrundlage A1 (Polymerlatex L(A)), bei der Herstellung der großteiligen Pfropfgrundlage C1 (Polymerlatex L(C1)) und bei der Herstellung des großteiligen Pfropfcopolymers C durch Aufpfropfen der Pfropfhüllen C2 und C3 auf die Pfropfgrundlage C1 (Polymerlatex L(C)).

Ein bevorzugter Gegenstand der Erfindung ist ein Verfahren, bei dem Wasser oder eine wässrige alkalische Lösung in einer Menge von 1 bis 50 Gew.-% bezogen auf das aus der Emulsionspolymerisationsreaktion erhaltene Polymerlatex L, zugegeben wird.

Ein Gegenstand ist auch ein Verfahren, bei dem die wässrige alkalische Lösung eine wässrige Lösung von anorganischen Carbonaten, Hydrogencarbonaten oder Hydroxiden, sowie Gemischen davon, ist.

Ferner betrifft die Erfindung ein Verfahren, bei dem die wässrige alkalische Lösung eine wässrige Lösung von $Na_2CO_3$, $NaHCO_3$, $NaOH$ und/oder $KOH$ mit einer Konzentration von 0,01 bis 1 Gew.-% ist.

Gegenstand ist auch ein Verfahren, bei dem das Alkylsulfonat ein sekundäres Alkylsulfonat ist. Ein bevorzugter Gegenstand der Erfindung ist ein Verfahren, bei dem die Pfropfgrundlage A1 zu 55 bis 65 Gew.-%, bezogen auf A, aus Acrylester-Polymer-Partikeln mit einer mittleren Teilchengröße bzw. Teilchendurchmesser (Gewichtsmittel) von 50 bis 120 nm, und die Pfropfhülle A2 aus 35 bis 45 Gew.-%, bezogen auf A, aus Styrol und Acrylnitril besteht.

Gegenstand ist auch ein Verfahren zur Herstellung einer thermoplastischen Formmasse, wobei das Natriumcarbonat bei der Herstellung der Pfropfcopolymere A und/oder C in einer Menge von 0,01 bis 2,5 Mol, bezogen auf die Summe der molaren Mengen der in der Pfropfgrundlage und Pfropfhülle eingesetzten Menge an Initiator, insbesondere KPS, verwendet wird.

Gegenstand ist auch ein Verfahren zur Herstellung einer thermoplastischen Formmasse, wobei die Teilchengrößenverteilung der Pfropfgrundlage A1 im Bereich von Q = 0,01 bis 0,5, insbesondere Q = 0,1 bis 0,4 beträgt, wobei $Q = (d_{90}-d_{10}) / d_{50}$ ist.

Der mittlere Teilchendurchmesser $d_{50}$ ist dabei definiert als der Durchmesser, bei dem 50 Gew.-% der Teilchen kleinere und 50 Gew.-% der Teilchen größere Durchmesser als der $d_{50}$-Wert haben. Zur Charakterisierung der Breite der Teilchengrößenverteilung der Kautschukteilchen werden neben dem $d_{50}$-Wert die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, dass sie auf 10 bis 90 Gew.-% der Teilchen bezogen sind. Der Quotient

$$\frac{d_{90}-d_{10}}{d_{50}} = Q$$

stellt ein Maß für die Verteilungsbreite der Teilchengröße dar.

Die mittlere Teilchengröße, definiert durch den $d_{50}$-Wert der Teilchengrößenverteilung, wird z.B. gemessen mit Hilfe der HDC (vgl. Hydrodynamische Chromatografie, W. Wohlleben, H. Schuch in "Measurement of Particle Size Distribution of Polymer Latexes", 2010, Editors: L. Gugliotta, J. Vega, p. 130 - 153). Eine weitere Methode ist die CPS (Disk Centrifuge Particle Size Analysis, CPS Instruments). Dieses Verfahren beruht auf der Trennung der unterschiedlich großen Partikel im Zentrifugalfeld, während die Detektion der Teilchen mittels UV Detektor erfolgt und aus der Laufzeit die Teilchengröße durch Kalibration mit einem bekannten Standard ermittelt werden kann. Das Verfahren ist beispielsweise beschrieben in "Comparative Study of Methods for the Measurement of Particle Size and Size Distribution of Polymeric Emulsions", M. Schneider, T. F. McKenna, Part. Syst. Charact. 19 (2002), Seiten 28 - 37. Eine weitere Methode zur Bestimmung des Massenmittelwertes der Teilchengröße ist die Trübungsphotometrie (vgl. "Bestimmung von Teilchengröße aus Trübung und Brechungsinkrement", H. Lange, Kolloid-Zeitschrift und Zeitschrift für Polymere, März 1968, Band 223, Ausgabe 1, Seite 24 bis 30).

Gegenstand ist auch ein Verfahren zur Herstellung einer thermoplastischen Formmasse, wobei die Teilchengröße (der mittlere Teilchendurchmesser) der Partikel A nach der Pfropf-Reaktion im Bereich von 70 bis 150 nm liegt.

Gegenstand ist auch ein Verfahren zur Herstellung einer thermoplastischen Formmasse, wobei die entsprechende Menge an Natriumcarbonat zunächst in einer Vorlage (in Wasser) gelöst und dann zur Polymerisation zugeführt wird.

Gegenstand ist auch ein Verfahren zur Herstellung einer thermoplastischen Formmasse, wobei während der Pfropfcopolymerisation (Herstellung von Pfropfcopoylmer A und C) eine Natriumcarbonat-Lösung zusammen mit einer KPS-Lösung, vorzugsweise kontinuierlich, zugegeben wird.

Offenbart ist auch die Verwendung der erhaltenen thermoplastischen Formmasse zur Herstellung von Formkörpern, Folien oder Beschichtungen.

Offenbart sind auch Formkörper, Folien und Beschichtungen aus thermoplastischen Formmassen, hergestellt nach einem Verfahren, wie beschrieben. Die durch die beschriebenen Verfahren erhaltenen Produkte können sich in verschiedenen Parametern von bekannten Produkten unterscheiden, z.B. durch geringere Restgehalte an Emulgatoren.

Die Erfindung betrifft auch ein Verfahren, bei dem die Teilchengrößenverteilung der Pfropfcopolymer-Teilchen A Q = 0,1 bis 0,4 beträgt und die mittlere Teilchengröße nach der Pfropf-Reaktion im Bereich von 50 bis 150 nm liegt.

Die Erfindung betrifft bevorzugt ein Verfahren unter zusätzlichem Einsatz einer großteiligen Komponente C, bei der die mittlere Teilchengröße nach der Pfropf-Reaktion im Bereich von 300 bis 700 nm liegt.

Ein weiterer Aspekt der Erfindung ist auch ein Verfahren zur Herstellung einer thermoplastischen Formmasse, die enthält:

50 bis 90 Gew.-%, oftmals 60 bis 79,9 Gew.-% einer Hartmatrix B, aus einem oder mehreren Copolymeren von Styrol, $\alpha$-Methylstyrol, Acrylnitril, Methylmethacrylat und/oder Phenylmaleinimid; insbesondere von Styrol und Acrylnitril,

10 bis 50 Gew.-%, oftmals 20 bis 39,9 Gew.-% mindestens eines Pfropfcopolymers C mit einer mittleren Teilchengröße (Gewichtsmittel) im Bereich von 200 bis 800 nm, enthaltend

50 bis 80 Gew.-%, bezogen auf C, eines elastomeren vernetzten Acrylester-Polymers C1,

2,5 bis 25 Gew.-%, bezogen auf C einer ersten Pfropfhülle C2 aus einem vinylaromatischen Monomeren und aus 10 bis 45 Gew.-%, bezogen auf C, einer zweiten Pfropfhülle C3 einer Mischung aus einem vinylaromatischen Monomeren C31 und einem polaren, copolymerisierbaren, ethylenisch ungesättigten Monomeren C32 im Gewichtsverhältnis von C31 zu C32 von 90 : 10 bis 60 : 40 und

0 bis 15 Gew.-%, oftmals 0 bis 5 Gew.-%, häufig 0,1 bis 5 Gew.-% eines oder mehrerer Additive D,

wobei die Summe aus B und C, und gegebenenfalls D 100 Gew.-% ergibt, und wobei die Reaktion zur Herstellung des Pfropfcopolymers C in Gegenwart einer 0,01 bis 4-fach molaren Menge an Natriumcarbonat, bezogen auf die Summe der bei der Herstellung der Pfropfgrundlage und Pfropfhülle eingesetzten molaren Menge an Initiator, insbesondere KPS, durchgeführt wird, und

wobei die Reaktion zur Herstellung des Pfropfcopolymers C in Gegenwart von 0,1 bis 1 Gew.-% eines Emulgators, insbesondere eines Alkalimetall-Alkylsulfonats, bezogen auf die Menge der jeweils eingesetzten Monomere, der bevorzugt kontinuierlich oder portionsweise während der Polymerisation hinzugefügt wird, durchgeführt wird, und

wobei dem Reaktionsgemisch zur Herstellung des Pfropfcopolymers C während der Polymerisationsreaktion, während der Nachpolymerisation und/oder nach der Polymerisationsreaktion Wasser oder eine wässrige alkalische Lösung zugegeben wird.

Die im Hinblick auf die Herstellung des Pfropfcopolymers A genannten bevorzugten Ausführungsformen sind für dieses weitere Herstellungsverfahren des Pfropfcopolymers C anwendbar. Offenbart ist auch die Verwendung und die aus der thermoplastischen Polymerzusammensetzung erhaltenen Formkörper, Folien und Beschichtungen.

Komponente A

Die thermoplastischen Zusammensetzungen bzw. Formmassen enthalten vorzugsweise 10 bis 40 Gew.-%, oftmals 20 bis 39,9 Gew.-% (bezogen auf die Summe aller Komponenten) mindestens eines Pfropfcopolymers A. Komponente A ist ein Pfropfcopolymer, aufgebaut aus einem elastomeren, vernetzten Acrylester-Polymer A1 als Pfropfgrundlage und (mindestens) einer Pfropfhülle A2.

Als Komponente A1 kann ein Acrylsäureester mit 1 bis 8 Kohlenstoffatomen, vorzugsweise 4 bis 8 Kohlenstoffatomen im Alkylrest, eingesetzt werden. Besonders bevorzugt werden die Acrylsäurealkylester: Acrylsäure-n-butylester und Acrylsäureethylhexylester verwendet.

Die Acrylsäureester können bei der Herstellung der als Pfropfgrundlage dienenden Acrylsäureester-Polymere allein oder auch in Mischung miteinander eingesetzt werden. Komponente A1 wird mit einer Menge von 50 bis 70, vorzugsweise von 55 bis 65, besonders bevorzugt von 58 bis 65 Gew.-%, bezogen auf Komponente A, eingesetzt.

Um eine Vernetzung der Acrylsäureester-Polymere A1 zu erhalten, wird die Polymerisation in Gegenwart von 0,1 bis 5 Gew.-%, vorzugsweise 0,5 bis 3 Gew.-%, bezogen auf die bei der Herstellung der Pfropfgrundlage eingesetzten gesamten Monomeren, eines copolymerisierbaren, mehrfunktionellen, die Vernetzung bewirkenden Monomeren durchgeführt.

Als solche mehrfunktionellen Vernetzungs-Monomeren eignen sich Monomere, die vorzugsweise zwei, gegebenenfalls auch mehr zur Copolymerisation befähigte ethylenische Doppelbindungen enthalten, die nicht in 1,3-Stellung konjugiert sind. Geeignete Monomere sind beispielsweise Divinylbenzol, Diallylmaleat, Diallylfumarat oder Diallylphthalat. Als günstig hat sich der Acrylsäureester des Tricyclodecenylalkohols erwiesen (vgl. DE 1 260 935, die auch für die nachstehend beschriebene Herstellung Hinweise gibt), auch Dihydrodicyclopentadienylacrylat (DCPA) genannt.

Zunächst wird die Pfropfgrundlage A1 hergestellt, indem der oder die Acrylsäureester und das vernetzende Monomere, gegebenenfalls zusammen mit weiteren Comonomeren, in wässriger Emulsion in an sich bekannter Weise polymerisiert. Es werden die üblichen Emulgatoren eingesetzt. Die Verwendung von Natriumcarbonat als Puffersubstanz in der Emulsionspolymerisation erlaubt es, die Menge an Emulgator geringer zu halten, als dies üblicherweise notwendig ist. Herkömmlicherweise werden Emulgatoren in einer Menge von 1 bis 5 Gew.-%, bezogen auf die zur Herstellung der Pfropfgrundlage eingesetzten Monomere, verwendet. Die Zugabe von Natriumcarbonat bewirkt eine Reduktion der Partikeldurchmesser der Latexteilchen der Pfropfgrundlage A1. Durch eine Verminderung der Emulgatormenge in dem Reaktionsgemisch können so die Partikeldurchmesser wieder angehoben und auf den gewünschten Wert gebracht werden. Es hat sich gezeigt, dass hierzu eine Emulgatormenge von 0,1 bis 1 Gew.-%, bezogen auf die zur Herstellung der Pfropfgrundlage eingesetzten Monomere, ausreichend ist. Bevorzugt werden die Emulgatoren in einer Menge von 0,3 bis 0,8 Gew.-%, bezogen auf die zur Herstellung der Pfropfgrundlage eingesetzten Monomere, verwendet.

Sämtliche üblicherweise bei der Emulsionspolymerisation verwendeten Emulgatoren sind für die Verwendung im erfindungsgemäßen Verfahren geeignet. Vorzugsweise verwendet man Alkalimetallsalze, insbesondere Natriumsalze, von Alkylsulfonaten oder Fettsäuren mit 10 bis 18 Kohlenstoffatomen. In einer bevorzugten Ausführungsform werden sekundäre Alkylsulfonate verwendet. Hierbei kann es sich um sekundäre Alkylmonosulfonate, Alkyldisulfonate, Alkylpolysulfonate oder Gemische davon handeln, wobei vorzugsweise der Anteil an sekundären Alkylmonosulfonaten in einem solchen Gemisch mindestens 50 Gew.-%, insbesondere mindestens 80 Gew.-% ausmacht.

Der Emulgator kann zu Beginn der Reaktion in einer Portion zur Herstellung der Pfropfgrundlage vorgelegt werden. Der Emulgator kann auch kontinuierlich und separat während der Pfropfcopolymerisation oder in Kombination mit weiteren Reaktionsteilnehmern wie Puffersubstanzen oder Polymerisationsinitiatoren zugegeben werden.

Bevorzugt wird der Emulgator zur Herstellung "kleinteiliger" Pfropfgrundlagen A1, d.h. zur Herstellung von Pfropfgrundlagen mit einem mittleren Teilchendurchmesser von < 200 nm, beispielsweise 50 bis 120 nm, in einer Portion zu Beginn der Herstellung im Reaktionsgefäß vorgelegt. Zur Herstellung "großteiliger" Pfropfgrundlagen C1 mit einem mittleren Teilchendurchmesser von $\geq$ 200 nm, beispielsweise 200 bis < 800 nm, wird der Emulgator vorzugsweise kontinuierlich über einen längeren Zeitraum zudosiert.

Eine Reduktion der Emulgatormenge im Vergleich zu herkömmlichen Verfahren kann sowohl durch Reduktion der zugegebenen Emulgatormenge (im Fall der einmaligen Zugabe) oder durch Reduktion der zugegebenen Emulgatormenge pro Zeiteinheit (im Fall der kontinuierlichen Zugabe) als auch durch Reduktion des Zugabezeitraums erfolgen. Es hat sich gezeigt, dass die Verkürzung des Zugabezeitraums keinen negativen Einfluss auf die Eigenschaften der Latexteilchen wie z.B. die Teilchengröße hat.

Im Allgemeinen wird bei einem Wasser- zu Monomer-Verhältnis von 2:1 bis 0,7:1 gearbeitet.

Die Reaktionsdauer beträgt vorzugsweise 0,1 bis 10 Stunden, insbesondere 1 bis 7 Stunden. Während der Reaktionszeit können Reaktionsteilnehmer wie beispielsweise Monomere, Emulgatoren oder Puffersubstanzen diskontinuierlich oder (vorzugsweise) kontinuierlich zugegeben werden. Vorzugsweise wird das Reaktionsgemisch nach der Zugabe sämtlicher Reaktionsteilnehmer über einen Zeitraum von vorzugsweise 0,1 bis 2 Stunden, insbesondere 0,5 bis 1,5 Stunden, gerührt, um eine möglichst vollständige Umsetzung zu erreichen (sog. Nachpolymerisation).

Als Polymerisationsinitiatoren dienen vorzugsweise die gebräuchlichen Persulfate, wie z.B. Kaliumperoxodisulfat (KPS). Es können im Prinzip auch Redox-Systeme zum Einsatz gelangen, dann entspricht die molare Menge an Redoxinitiator der KPS-Menge.

Als weitere Polymerisations-Hilfsstoffe werden erfindungsgemäß die Puffersubstanzen Natriumcarbonat (oder Kaliumcarbonat) und gegebenenfalls Molekulargewichtsregler wie Mercaptane, Terpinole oder dimeres $\alpha$-Methylstyrol verwendet. Ebenfalls sind Pufferlösungen enthaltend Alkalihydroxide wie z.B. Natriumhydroxid oder Kaliumhydroxid zu nennen.

Die Puffersubstanzen (wie insbesondere Natriumcarbonat) werden in einer 0,01 bis 4-fachen molaren Menge, oftmals 0,05 bis 3-fachen molaren Menge, bezogen auf die Summer der bei der Herstellung der Pfropfgrundlage und Pfropfhülle eingesetzten molaren Menge an Initiator, insbesondere KPS, verwendet. Die Puffersubstanzen können z.B. in einer Menge zwischen 0 bis 5 Gew-%, insbesondere 0,01 bis 1 Gew.-%, bezogen auf die Pfropfgrundlage A1, eingesetzt werden.

Die Puffersubstanz kann, wie zuvor bereits im Hinblick auf die Emulgatorzugabe dargelegt, in einer Portion zu Beginn der Herstellung der Pfropfgrundlage A1 vorgelegt werden, sie kann auch kontinuierlich und separat während der Pfropfcopolymerisation, kontinuierlich in Kombination mit dem Polymerisationsinitiatoren während der Pfropfcopolymerisation und/oder zu einem späteren Zeitpunkt der Polymerisation zu der Reaktionsmischung zugegeben werden.

Zur Verbesserung der Stabilität des Polymerlatex L(A1) kann diesem Wasser oder eine wässrige alkalische Lösung zugegeben werden. Es hat sich gezeigt, dass eine solche Verdünnung die Stabilität des Polymerlatex L(A1) signifikant erhöht. Die Zugabe kann zu jedem Zeitpunkt während oder nach der Polymerisation erfolgen. Vorteilhaft findet die Zugabe von Wasser oder wässriger alkalischer Lösung statt, nachdem die Zugabe der übrigen Reaktionsteilnehmer, insbesondere die Zugabe an Monomer, beendet ist. In einer Ausführungsform findet die Zugabe daher bevorzugt im direkten Anschluss an die Monomerzugabe während der Nachpolymerisation statt. In einer weiteren Ausführungsform findet die Zugabe im Anschluss an die Nachpolymerisation, d.h. nach Beendigung der Pfropf-Polymerisationsreaktion statt.

Vorzugsweise wird dem Polymerlatex L(A1) Wasser oder eine wässrige alkalische Lösung zugegeben, bevor der nächste Schritt des Herstellungsverfahrens durchgeführt wird. Insbesondere bevorzugt erfolgt die Zugabe von Wasser oder einer wässrigen alkalischen Lösung im Reaktionsgefäß der Polymerisationsreaktion im unmittelbaren Anschluss an die Polymerisationsreaktion zur Herstellung des Polymerlatex L(A1). Das bedeutet, dem Polymerlatex L(A1) wird vorzugsweise Wasser oder eine wässrige alkalische Lösung zugegeben, bevor die Pfropfhülle A2 auf die Pfropfgrundlage A1 aufgepfropft wird.

Dazu wird Wasser oder eine wässrige alkalische Lösung in einer Menge von 1 bis 50 Gew.-%, bezogen auf den aus der Emulsionspolymerisationsreaktion der Pfropfgrundlage A1 erhaltenen Polymerlatex L(A1), zugegeben. Vorzugsweise wird Wasser oder eine wässrige alkalische Lösung in einer Menge von 10 bis 40 Gew.-%, insbesondere 20 bis 30 Gew.-% verwendet.

Geeignete wässrige alkalische Lösungen sind insbesondere wässrige Lösungen anorganischer Carbonate, Hydrogencarbonate und/oder Hydroxide ist, wie beispielsweise $Li_2CO_3$, $Na_2CO_3$, $K_2CO_3$, $LiHCO_3$, $KHCO_3$, $NaHCO_3$, LiOH, NaOH, KOH. Besonders bevorzugt werden wässrige Lösungen von $Na_2CO_3$, $NaHCO_3$, NaOH oder KOH sowie Gemische davon verwendet. Die wässrigen alkalischen Lösungen weisen vorzugsweise eine Konzentration von 0,1 bis 10 mmol/L, insbesondere 0,5 bis 5 mmol/L auf.

Durch die Zugabe von Wasser oder einer wässrigen alkalischen Lösung zu dem aus dem erfindungsgemäß Verfahren erhaltenen Polymerlatex L wird eine Steigerung der Latexstabilität erreicht. Dies ermöglicht es, ein stabiles Polymerlatex L(A1) zu erhalten, welches trotzdem nur eine geringe Menge an Emulgator enthält. Die Effekte, welche durch die Reduktion der Emulgatormenge während und nach der Emulsionspolymerisation verursacht werden, können so durch die Zugabe von $Na_2CO_3$ während der Polymerisation sowie durch die Zugabe von Wasser oder einer wässrigen alkalischen Lösung zu dem erhaltenen Polymerlatex L(A1) ausgeglichen oder sogar übertroffen werden.

Die Pfropfhülle A2 ist aus vinylaromatischen Verbindungen, wie Styrol, $\alpha$-Methylstyrol oder kernalkyliertes Styrol einerseits, und polaren copolymerisierbaren, ethylenisch ungesättigten Monomeren, wie z. B. Acrylnitril, Methacrylsäurealkylester mit 1 bis 4 Kohlenstoffatomen im Alkylrest, Acrylsäure, Maleinsäureanhydrid, Acrylamid oder Vinylmethylether andererseits aufgebaut. Diese Pfropfhülle wird bevorzugt wieder in wässriger Emulsion auf die als Kautschuk vorliegende Pfropfgrundlage A1 (d.h. Polymerlatex L(A1)) aufgepfropft. Die Pfropfcopolymerisation kann im gleichen System erfolgen wie die Emulsionspolymerisation zur Herstellung der Pfropfgrundlage, wobei, falls notwendig, weiterer Emulgator, Puffersubstanz und Initiator zugegeben werden kann.

Die Pfropfhülle A2 wird mit einer Menge von 30 bis 50, vorzugsweise von 35 bis 45 Gew.-%, bezogen auf Komponente A eingesetzt. Die vinylaromatische Verbindung (z.B. Styrol) der Pfropfhülle A2 hat zu dem polaren copolymerisierbaren, ethylenisch ungesättigten Monomeren (z.B. Acrylnitril) oftmals ein Gewichtsverhältnis von 80 : 20 bis 65 : 35. Vorzugsweise liegen Styrol und Acrylnitril in einem Verhältnis von etwa 75 : 25 vor. In einer weiteren bevorzugten Ausführungsform liegen Styrol und Acrylnitril in einem Gewichts-Verhältnis von 77 : 23 vor.

Das aufzupfropfende Monomerengemisch kann dem Reaktionsgemisch auf einmal, in mehreren Stufen oder vorzugsweise kontinuierlich während der Polymerisationsreaktion zugegeben werden. Die Pfropfcopolymerisation wird so geführt, dass ein Pfropfgrad von 30 bis 50 %, vorzugsweise von 35 bis 45 %, im Pfropfcopolymer A resultiert.

Der Pfropfgrad bezieht sich hierbei auf das Massen-Verhältnis von Pfropfkern zu der Summe aus Pfropfkern und Pfropfhülle:

$$\text{Pfropfgrad [\%]} = (m(\text{Pfropfhülle}) * 100) / (m(\text{Pfropfgrundlage}) + m(\text{Pfropfhülle})).$$

Man erhält das Polymerlatex L(A). Zur Verbesserung der Stabilität des Polymerlatex L(A), kann man diesem Wasser oder eine wässrige alkalische Lösung zugeben. Es hat sich gezeigt, dass eine solche Verdünnung die Stabilität des Polymerlatex L(A) signifikant erhöht. Die Zugabe kann zu jedem Zeitpunkt während oder nach der Polymerisation erfolgen. Vorteilhaft findet die Zugabe von Wasser oder wässriger alkalischer Lösung statt, nachdem die Zugabe der übrigen Reaktionsteilnehmer, insbesondere die Zugabe an Monomer, beendet ist. In einer Ausführungsform findet die Zugabe daher bevorzugt im direkten Anschluss an die Monomerzugabe während der Nachpolymerisation statt. In einer weiteren Ausführungsform findet die Zugabe im Anschluss an die Nachpolymerisation, d.h. nach Beendigung der Polymerisationsreaktion statt. Im Übrigen gelten die zur Herstellung des Polymerlatex L(A1) getroffenen Aussagen.

Die erfindungsgemäßen Pfropfcopolymere A können so weiter verwendet werden, wie sie in der Reaktionsmischung anfallen, beispielsweise als Polymerlatex L(A). Alternativ können sie aber auch in einem weiteren Schritt aufgearbeitet werden. Maßnahmen zur Aufarbeitung sind dem Fachmann im Prinzip bekannt. Zu den Aufarbeitungsschritten zählt zum Beispiel die Isolierung der Pfropfcopolymere A aus der Reaktionsmischung, zum Beispiel durch Sprühtrocknung, Scherung oder durch Fällen mit starken Säuren oder mittels anderer Fällungsmittel, z.B. aus anorganischen Verbindungen wie Magnesiumsulfat oder Calciumchlorid. Zu den Aufarbeitungsschritten zählt auch das Trocknen des isolierten Kautschuks. Der Feststoffgehalt der Dispersion des Pfropfkautschuks beträgt oftmals von 35-45 Gew.%, z.B. ca. 40 Gew.-%.

Durch die reduzierte Emulgatormenge, die während der Emulsionspolymerisation nach dem erfindungsgemäßen Verfahren notwendig ist, ist es möglich das Ausfällen des Pfropfcopolymers A mit einer geringeren Menge an Fällungsmittel als üblich zu erreichen. Da die Emulgatormenge nach dem erfindungsgemäßen Verfahren um 20 bis 50 Gew.-%, insbesondere um 30 bis 40 Gew.-% reduziert werden kann, werden zur Fällung des Pfropfcopolymers A ebenfalls 20 bis 50 Gew.-%, insbesondere 30 bis 40 Gew.-% weniger Fällungsmittel benötigt. Geeignete Fällungsmittel sind dem Fachmann bekannt. Beispielsweise können Magnesium- oder Calciumsalze wie Magnesiumsulfat oder Calciumchlorid eingesetzt werden. So kann ein weiterer positiver Effekt in wirtschaftlicher und ökologischer Hinsicht erzielt werden, da das Abwasser nicht nur weniger mit Emulgatoren, sondern auch geringer mit Fällungsmittel belastet ist.

Komponente B

Die thermoplastischen Zusammensetzungen bzw. Formmassen enthalten 50 bis 90 Gew.-% (bezogen auf die Summe aller Komponenten) mindestens eines Styrol-Copolymeren B. Die Komponente B ist dem Fachmann bekannt und kann über gängige Verfahren, z.B. durch radikalische Polymerisierung, hergestellt werden.

Als Styrol-Copolymere können insbesondere SAN oder andere, kautschukfreie Styrol-copolymere verstanden werden. Beispiele für die Komponente B sind gängige Copolymer-Matrices, wie zum Beispiel durch Massepolymerisation, Emulsions- oder Lösungspolymerisation hergestellte Styrol-Acrylnitril-Copolymere (SAN). Auch Mischungen von Polymer-Matrices, wie z.B. SAN plus PMMA, Polyamid oder Polycarbonat, sind geeignet, wie beispielsweise in Ullmann's Encyclopedia of Industrial Chemistry (VCH-Verlag, 5. Ausgabe, 1992, S. 633 f.) beschrieben. Besonders bevorzugt umfasst Komponente B als $\alpha,\beta$-ungesättigte Komponente Acrylnitril, sowie Styrol und/oder $\alpha$-Methylstyrol als aromatische Vinyl-Komponente.

In einer weiteren Ausführungsform der Erfindung wird eine Formmasse hergestellt, die eines oder mehrere Styrol-Copolymere B enthält, wobei dieses Styrol-Copolymer B aus zwei oder drei Monomeren aus der Gruppe Styrol, Acrylnitril und/oder $\alpha$-Methylstyrol aufgebaut ist. Die Hartmatrix B wird vorzugsweise aus den Komponenten Acrylnitril und Styrol und/oder $\alpha$-Methylstyrol durch Massepolymerisation oder in Gegenwart eines oder mehrerer Lösungsmittel hergestellt. Bevorzugt sind dabei Copolymere B mit Molmassen $M_w$ von 15.000 bis 300.000 g/mol, wobei die Molmassen zum Beispiel durch Lichtstreuung in Tetrahydrofuran bestimmt werden können (GPC mit UV-Detektion).

Komponente B wird vorzugsweise mittels Substanzpolymerisation, Emulsionspolymerisation oder Lösungspolymerisation hergestellt. Besonders bevorzugt wird die Polymerisation in Gegenwart von 0 bis 20 Gew.-%, bezogen auf das Gesamt-Gemisch, aromatischen Lösemitteln, wie Toluol, Xylol oder Ethylbenzol durchgeführt. Näheres zu der Herstellung von Komponente B kann auch dem Kunststoff-Handbuch (Vieweg-Daumiller, Band V Polystyrol, Carl-Hanser-Verlag, München, 1969, Seite 124, Zeilen 12 ff.) entnommen werden. Die Hartmatrix B kann zum Beispiel enthalten:

(Ba) Polystyrolacrylnitril, hergestellt aus, bezogen auf (Ba), 60 bis 85 Gew.-% Styrol und 15 bis 40 Gew.-% Acrylnitril, oder
(Bb) Poly-$\alpha$-Methylstyrolacrylnitril, hergestellt aus, bezogen auf (Bb), 60 bis 85 Gew.-% $\alpha$-Methylstyrol und 15 bis 40 Gew.-% Acrylnitril, oder
(Bc) eine Mischung der Copolymer-Matrix (Ba) und der Copolymer-Matrix (Bb).

Die Copolymer-Matrix B kann auch durch Copolymerisation von Acrylnitril, Styrol und $\alpha$-Methylstyrol, oftmals von Acrylnitril und Styrol, gewonnen werden.

Komponente C

Die thermoplastischen Zusammensetzungen bzw. Formmassen enthalten 0 bis 40 Gew.-%, oftmals 1 bis 40 Gew.-% (bezogen auf die Summe aller Komponenten) eines Pfropfcopolymers C. Komponente C ist ein Pfropfcopolymer, aufgebaut aus mindestens einem elastomeren vernetzten Acrylester-Polymer C1 als Pfropfgrundlage und mindestens zwei Pfropfhüllen C2 und C3. Als Pfropfgrundlage C1 für die Herstellung des zweiten Pfropfcopolymers C wird ebenfalls ein vernetztes Acrylsäureester-Polymer eingesetzt. Für die Art und Weise der Herstellung der Pfropfgrundlage C1 gilt das zur Pfropfgrundlage A1 bei Pfropfcopolymer A gesagte.

Im Unterschied zu dem Pfropfcopolymer A, soll das Pfropfcopolymer C großteilig sein, nämlich einen mittleren Teilchendurchmesser bzw. mittlere Teilchengröße (Gewichtsmittel) im Bereich von 200 bis 800 nm, vorzugsweise im Bereich von 300 bis 700 nm aufweisen. Es ist erstrebenswert, wenn dieses großteilige Pfropfcopolymer C eine enge Teilchengrößenverteilung aufweist, wobei es günstig ist, wenn der Quotient Q = $(d_{90}-d_{10})$ / $d_{50}$ kleiner als 0,3, vorzugsweise kleiner als 0,2 ist. Als Pfropfgrundlage C1 geeignete großteilige vernetzte Acrylsäureester-Polymere können nach den bekannten Verfahren zur Herstellung großteiliger Dispersionen erhalten werden, zweckmäßig jedoch nach der Saatlatex-Methode, wie sie in der DE 1 911 882 für die Herstellung von ASA-Polymeren beschrieben ist.

Nach dieser Methode wird ein kleinteiliger vernetzter Acrylsäureester-Polymer-Kautschuk (Polymerlatex L(C1)) mit einem mittleren Teilchendurchmesser, dessen Teilchendurchmesser also vorzugsweise unter 120 nm liegt und wie beschrieben durch Emulsionspolymerisation von Acrylsäureester, vernetzenden Monomeren sowie gegebenenfalls weiteren Comonomeren erhalten worden ist, durch Zugabe von weiteren Monomeren, Emulgator und gegebenenfalls Puffersubstanz einer weiteren Polymerisation unterworfen. Dabei werden die Bedingungen (vgl. Journal of Applied Polymer Science, Vol. 9 (1965), Seiten 2929 bis 2938) so eingestellt, dass lediglich die vorhandenen Polymerisatpartikel des Saatlatex weiter wachsen, aber keine neuen Latexteilchen gebildet werden. In der Regel wird ein Initiator eingesetzt.

Die Teilchengröße des resultierenden großteiligen Kautschuks lässt sich durch Variation des Mengenverhältnisses von Saatlatex zu Monomeren in der gewünschten Weise einstellen.

Zur Herstellung des erfindungsgemäßen zweiten Pfropfcopolymers C wird in Gegenwart des zuvor hergestellten großteiligen Kautschuk C1 zuerst ein vinylaromatisches Monomer, insbesondere Styrol, aber ggf. auch $\alpha$-Methylstyrol oder ein kernalkyliertes Styrol, wie p-Methylstyrol und tert.-Butylstyrol verwendet.

Die Pfropfcopolymerisation kann zweckmäßig im gleichen System wie die Emulsions-polymerisation zur Herstellung der Pfropfgrundlage A1 vorgenommen werden; dabei kann weiterer Emulgator, Puffersubstanze und Initiator zugegeben werden. Dabei kann das Polymerlatex L insbesondere durch die Zugabe von Wasser oder wässriger alkalischer Lösung stabilisiert werden. Dies ermöglicht es die Emulgatorkonzentration möglichst weit zu reduzieren.

Das aufzupfropfende Monomere, insbesondere Styrol, kann dem Reaktionsgemisch auf einmal, absatzweise in mehreren Stufen oder vorzugsweise kontinuierlich während der Polymerisation zugegeben werden.

Die Pfropfcopolymerisation wird so geführt, dass ein Pfropfgrad von 2,5 bis 25 Gew.-%, vorzugsweise von 10 bis 20 Gew.-%, im Pfropfcopolymer C resultiert.

In einer zweiten Stufe wird dann die Pfropfcopolymerisation mit einem Monomerengemisch, also mindestens einem vinylaromatischen Monomeren, insbesondere Styrol, und mindestens einem copolymerisierbaren polaren Monomeren, insbesondere Acrylnitril, im Verhältnis von 90 : 10 bis 60 : 40, vorzugsweise 80 : 20 bis 65 : 35 fortgeführt. Beispiele für vinylaromatische Monomere sind bereits bei der Beschreibung der ersten Pfropfstufe genannt. Ein Beispiel für ein polares copolymerisierbares, ethylenisch ungesättigtes Monomer ist Acrylnitril.

Außer Acrylnitril kann Methacrylsäurealkylester mit 1 bis 4 Kohlenstoffatomen im Alkylrest, Acrylsäure, Maleinsäureanhydrid, Acrylamid und/oder Vinylmethylether verwendet werden. Bevorzugt ist Acrylnitril, Ethylacrylat, Methylmethacrylat oder deren Gemische. Besonders bevorzugt für die 2. Stufe der Pfropfung werden vor allem Styrol und Acrylnitril, ferner $\alpha$-Methylstyrol und Acrylnitril sowie Styrol, Acrylnitril und Methylmethacrylat. Auch der zweite Schritt der Pfropfcopolymerisation wird zweckmäßigerweise im vorhandenen System durchgeführt; dabei kann, falls notwendig, weiterer Emulgator und Initiator zugegeben werden. Das aufzupfropfende Monomeren-Gemisch kann wieder auf einmal, absatzweise in mehreren Stufen oder vorzugsweise kontinuierlich zugegeben werden. Die Pfropfcopolymerisation wird so geführt, dass ein Pfropfgrad von 10 bis 45 Gew.-%, vorzugsweise von 15 bis 40 Gew.-%, im Pfropfcopolymer C resultiert.

Die Stabilität des Polymerlatex L(C) kann erfindungsgemäß dadurch gesteigert werden, dass dem Reaktionsgemisch zur Herstellung des Pfropfcopolymers C Wasser oder eine wässrige alkalische Lösung zugegeben wird. Diesbezüglich gelten die zur Stabilisierung des Polymerlatex L(A) gemachten Angaben.

Die Zugabe kann zu jedem Zeitpunkt während oder nach der Polymerisation erfolgen, um den gewünschten Effekt zu erzielen. Vorteilhaft findet die Zugabe von Wasser oder wässriger alkalischer Lösung statt, nachdem die Zugabe der übrigen Reaktionsteilnehmer, insbesondere die Zugabe an Monomer, beendet ist. In einer Ausführungsform findet die Zugabe daher bevorzugt im direkten Anschluss an die Monomerzugabe während der Nachpolymerisation statt. In einer weiteren Ausführungsform findet die Zugabe im Anschluss an die Nachpolymerisation, d.h. nach Beendigung der Polymerisationsreaktion statt.

Komponente D

Als weitere Komponente D enthalten die thermoplastischen Zusammensetzungen gegebenenfalls 0 bis 15 Gew.-%, oftmals 0,1 bis 15 Gew.-%, häufig auch 0,1 bis 5 Gew.-% (bezogen auf die Summer aller Komponenten) eines oder mehrerer, zu den Komponenten A bis C unterschiedlicher Additive (Hilfs- und Zusatzstoffe). Hier sind organische Ester, teilchenförmige mineralische Füllstoffe, Verarbeitungshilfsmittel, Stabilisatoren und Oxidations-Verzögerer, Mittel gegen Wärmezersetzung und Zersetzung durch ultraviolettes Licht, Gleit- und Entformungsmittel, Flammschutzmittel, Farbstoffe und Pigmente und Weichmacher zu nennen.

Ester sind als niedermolekulare Verbindungen zu verstehen. Gemäß der vorliegenden Erfindung können auch zwei oder mehr dieser Verbindungen verwendet werden. Im Allgemeinen liegen die Verbindungen mit einem Molgewicht kleiner 3000 g/mol, vorzugsweise kleiner 150 g/mol vor.

Teilchenförmige mineralische Füllstoffe können zum Beispiel durch amorphe Kieselsäure, Carbonate wie Magnesiumcarbonat, Calciumcarbonat (Kreide), gepulverter Quarz, Glimmer, unterschiedlichste Silikate wie Tone, Muskovit, Biotit, Suzoit, Zinnmaletit, Talkum, Chlorit, Phlogopit, Feldspat, Calciumsilikate wie Wollastonit oder Kaolin, besonders kalzinierter Kaolin zur Verfügung gestellt werden.

Faserförmige Füllstoffe wie Kohlenstofffasern, Kaliumtitanat-Whisker, Aramidfasern oder bevorzugt Glasfasern können eingesetzt, wobei mindestens 50 Gew.-% der faserförmigen Füllstoffe (Glasfasern) eine Länge von mehr als 50 mm aufweisen. Vorzugsweise weisen mindestens 70 Gew.-% der Glasfasern eine Länge von mehr als 60 $\mu$m auf. Die Länge der Glasfasern bezieht sich auf ein fertiges Formteil, das beispielsweise nach dem Spritzgießen erhalten wird.

Dabei können die Glasfasern den Formmassen bereits in der entsprechend abgelängten (gekürzten) Form oder auch in Form von Endlossträngen (Rovings) zugesetzt werden.

Unter UV-Stabilisatoren fallen beispielsweise verschiedene substituierte Resorcine, Salicylate, Benzotriazole und Benzophenone, die im Allgemeinen in Mengen bis zu 2 Gew.-% eingesetzt werden können.

Erfindungsgemäß können der thermoplastischen Formmasse Oxidationsverzögerer und Wärmestabilisatoren zugesetzt werden. Sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der Mischung, sind einsetzbar.

Ferner können gemäß der Erfindung Gleit- und Entformungsmittel, die in der Regel in Mengen bis zu 1 Gew.-% der thermoplastischen Masse zugesetzt werden. Zu nennen sind hier Stearinsäure, Stearylalkohol, Stearinsäurealkylester und -amide, vorzugsweise Irganox®, sowie Ester des Pentaerythrits mit langkettigen Fettsäuren.

Es können beispielsweise die Calcium-, Zink- oder Aluminiumsalze der Stearinsäure sowie Dialkylketone, zum Beispiel Distearylketon, eingesetzt werden. Weiterhin können auch Ethylenoxid-Propylenoxid-Copolymere als Gleit- und Entformungsmittel verwendet werden. Ferner könne natürliche sowie synthetische Wachse verwendet werden. Zu nennen sind PP-Wachse, PE-Wachse, PA-Wachse, gepfropfte PO-Wachse, HDPE-Wachsen, PTFE-Wachse, EBS-Wachse, Montanwachs, Carnauba- und Bienenwachse.

Flammschutzmittel können sowohl halogenhaltige als auch halogenfreie Verbindungen sein. Geeignete Halogenverbindungen, wobei bromierte Verbindungen den chlorierten vorzuziehen sind, bleiben bei der Herstellung und Verarbeitung der erfindungsgemäßen Formmasse stabil, so dass keine korrosiven Gase freigesetzt werden. Bevorzugt werden halogenfreie Verbindungen, wie zum Beispiel Phosphorverbindungen, insbesondere Phosphinoxide und Derivate von Säuren des Phosphors und Salze von Säuren und Säurederivaten des Phosphors, verwendet.

Besonders bevorzugt enthalten Phosphorverbindungen Ester-, Alkyl-, Cycloalkyl-und/oder Aryl-Gruppen. Ebenfalls geeignet sind oligomere Phosphorverbindungen mit einem Molekulargewicht kleiner 2000 g/mol wie zum Beispiel in EP-A 0 363 608 beschrieben.

Ferner können Pigmente und Farbstoffe enthalten sein. Diese sind allgemein in Mengen von 0 bis 15 Gew.-%, bevorzugt 0,1 bis 10 Gew.-% und insbesondere 0,5 bis 8 Gew.-% enthalten. Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 $PbCO_3 \cdot Pb(OH)_2$), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz ($Fe_3O_4$), Spinellschwarz ($Cu(Cr, Fe)_2O_4$), Manganschwarz (Mischung aus Mangandioxid, Siliciumoxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff). Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel erhältlich. Weiterhin kann es von Vorteil sein, die genannten Pigmente bzw. Farbstoffe in Mischung einzusetzen, zum Beispiel Ruß mit Kupferphthalocyaninen, da allgemein die Farbdispergierung in den Thermoplasten erleichtert wird.

Das erfindungsgemäße Herstellungsverfahren führt zu Formmassen, welche im Vergleich zu herkömmlich hergestellten Formmassen reduzierte Mengen an Emulgator-und Fällungsmittelresten in der Formmasse aufweisen. Ebenso sind die Abwässer aus dem Herstellungsverfahren geringer belastet. Die erfindungsgemäße Prozessoptimierung verbessert sowohl die Herstellung von kleinteiligen als auch großteiligen Pfropfcopolymeren. Die Eigenschaften der Produkte werden durch das Verfahren nicht negativ beeinflusst.

Die allgemeine Herstellung von kleinteiligen (z.B. 50 bis 150 nm) sowie großteiligen (200 bis 800 nm) Pfropfcopolymeren wird in EP-A 0450485 beschrieben.

Butylacrylat wird oftmals zugegeben, wenn eine Lösung aus einem Salz als Polymerisations-Hilfsstoff, bevorzugt Natriumcarbonat oder Kaliumcarbonat, zugegeben wird. Der pH-Wert kann bei der Polymerisation zwischen 6 und 10 eingestellt werden. Anschließend kann die Polymerisation durchgeführt werden. Im Anschluss kann der erhaltene Kautschuk mit einer Mischung aus Styrol und Acrylnitril gepfropft werden.

Bevorzugt wird zur Herstellung der thermoplastischen Formmasse eine Schmelze des "harten" Copolymers B (z.B. SAN) mit dem Pfropfcopolymer A (hergestellt unter Einsatz von Puffer), und gegebenenfalls mit dem Pfropfcopolymer C und den Additiven D, bei einer Temperatur über 200 °C intensiv vermischt. Alternativ kann das Copolymer B mit dem Pfropfcopolymer C und den Additiven D vermischt werden.

Das Abmischen der Komponenten A und B, gegebenenfalls mit dem Pfropfcopolymer C und den Additiven D (bzw. der Komponenten B, C und D), kann nach allen bekannten Methoden erfolgen. Wenn die Komponenten z. B. durch Emulsions-Polymerisation hergestellt worden sind, ist es z. B. möglich, die erhaltenen Polymer-Dispersionen miteinander zu vermischen, darauf die Polymere gemeinsam auszufällen und das Polymeren-Gemisch aufzuarbeiten.

Besonders bevorzugt ist jedoch das Abmischen der Komponenten A und B, und gegebenenfalls des Pfropfcopolymers C und der Additive D, durch gemeinsames Extrudieren, Kneten oder Verwalzen der Komponenten, wobei die Komponenten notwendigenfalls zuvor aus der bei der Polymerisation erhaltenen Lösung oder wässrigen Dispersion isoliert worden sind. Produkte der Pfropfcopolymerisation (Komponente A und gegebenenfalls C), welche aus wässriger Dispersion erhalten wurden, können auch nur teilweise entwässert und als feuchte Krümel mit der Hartkomponente B (z.B. SAN) vermischt werden. Es ist jedoch zu Beachten, dass bei der Vermischung die vollständige Trocknung der Pfropfcopolymere erfolgt.

Die erfindungsgemäßen thermoplastischen Massen lassen sich nach den für die Thermoplasten-Verarbeitung üblichen Verfahren, wie z. B. Extrusion und Spritzgießen, zu unterschiedlichen Formkörpern, wie z. B. Möbeln für den Innen und Außenbereich, Karosserieteilen, Booten, Schildern, Straßenlampenabdeckungen und Kindermöbeln verarbeiten.

Die Erfindung wird durch die Beispiele und Ansprüche näher erläutert.

Zu den Messmethoden:
Die mittlere Teilchengröße, definiert durch den d50-Wert der Teilchengrößenverteilung, wird gemessen mit Hilfe der Trübungsphotometrie ("Bestimmung von Teilchengröße aus Trübung und Brechungsinkrement", H. Lange, Kolloid-Zeitschrift und Zeitschrift für Polymere, März 1968, Band 223, Ausgabe 1, Seite 24-30).

Bestimmung der Latexstabilität nach dem Klaxon-Verfahren

Zur Bestimmung der Stabilität der erhaltenen Latexsuspension bzw. Latexdispersion werden 80 g des erhaltenen Polymerlatex mit einem Ultra-Turrax-Rührer (Fa. Janke & Kunkel), d.h. einem Rührer mit einer kreisrunden Scheibe mit einem Durchmesser von ca. 2 cm, die zentrisch und rechtwinklig an der Rührachse befestigt ist, bei 16.000 U/min gerührt. Dabei wird die Zeit bis zur Koagulation bestimmt.

Beispiel A) Herstellung des kleinteiligen Pfropfcopolymers

Die Herstellung der Pfropfgrundlage A erfolgt analog zu EP-A 0450485 (Pfropfcopolymer A, siehe Seite 7, Zeile 11). Dabei wird das entsprechende Salz (in entsprechender Menge) zunächst in der Vorlage gelöst und anschließend die Polymerisation, wie in EP 0450485 beschrieben, durchgeführt.

Das Acrylat-Pfropfcopolymer C und die Hartkomponente B (SAN-Copolymer) werden analog zu EP 0450485 hergestellt. Die Experimente wurden mit ca. 2 kg Pfropfkautschuk durchgeführt.

a1) Herstellung der Pfropfgrundlage A1

Es werden jeweils Gewichtsanteile bezogen auf die Gesamtmasse der Monomere angegeben (parts per hundred monomer, nachfolgend als "pphm" abgekürzt). Dies bezieht sich auf die Summe, bezogen auf die Masse, der Monomere der Grund- und der Pfropfstufe.

Bei Raumtemperatur wurden 86,12 pphm Wasser (demin.), 0,61, 0,5 bzw. 0,35 pphm Emulgator (Natriumalkylsulfonat) sowie 0,07 pphm $Na_2CO_3$ bzw. 0,23 pphm $NaHCO_3$ vorgelegt. Das Reaktionsgefäß wurde evakuiert und mit Stickstoff gespült. Anschließend wurde das Reaktionsgemisch auf 59 °C erwärmt und 0,18 pphm KPS wurden zusammen mit 5 pphm Wasser (demin.) zugegeben. Danach wurden 59,51 pphm Butylacrylat und 1,21 pphm DCPA über einen Zeitraum von 210 min zudosiert. Das Reaktionsgemisch wurde für 1 h bei 59 °C nachpolymerisiert. Tabelle 1 fasst die Ergebnisse dieser Polymerisation zusammen.

a2) Herstellung des Pfropfcopolymers A

Zu der in Schritt a1) erhaltenen Latexdispersion wurden bei 61 °C eine Menge von 90,37 pphm Wasser (demin.) und 0,11 pphm Emulgator (Natriumalkylsulfonat) gegeben. Anschließend wurden 5,22 pphm Wasser (demin.) und 0,16 pphm KPS zugegeben. Es wurde zunächst über einen Zeitraum von 20 min 6,3 pphm Styrol und 2,1 pphm Acrylnitril zugegeben und für 20 min nachpolymerisiert. Anschließend wurden 24 pphm Styrol und 8 pphm Acrylnitril zugegeben und für eine Stunde nachpolymerisiert. Tabelle 1 fasst die Ergebnisse dieser Polymerisation zusammen.

Tabelle 1. Änderung der Latexteilchengröße bei reduzierter Emulgator-Konzentration.

| Bsp. | NaHCO$_3$ (pphm) | Na$_2$CO$_3$ (pphm) | Initiator KPS (pphm) | Emulgator (Pfropfgrundlage) (pphm) | Teilchengröße der Pfropfgrundlage aus Trübungsphotometrie [nm] | Teilchengröße des Pfropfcopolymers aus Trübungsphotometrie [nm] |
|---|---|---|---|---|---|---|
| V1 | 0,23 | | 0,18 | 0,61 | 77 | 89 |
| 1 | | 0,07 | 0,18 | 0,61 | 62 | 72 |
| 2 | | 0,07 | 0,18 | 0,5 | 66 | 77 |
| 3 | | 0,07 | 0,18 | 0,35 | 75 | 87 |

Es zeigte sich, dass die Verwendung von Natriumcarbonat (0,07 pphm) an Stelle des üblicherweise als Puffersubstanz eingesetzten Natriumhydrogencarbonats (0,23 pphm in Vergleichsbeispiel V1), es erlaubt, die Emulgatormenge deutlich zu reduzieren und trotzdem Latexteilchen mit dem gewünschten Durchmesser (von etwa 89 nm beim Vergleichsbeispiel) zu erhalten. Während die Beispiele 1 und 2 zu Teilchengrößen führten, die deutlich geringer waren, als die des Vergleichsbeispiels V1, konnten mit einer Reduzierung der eingesetzten Emulgatormenge von 0,61 pphm auf 0,35 pphm in Beispiel 3 Latexteilchen hergestellt werden, deren Teilchendurchmesser in etwa dem des Vergleichsversuchs V1 entspricht.

Den erhaltenen Polymerlatices wurden anschließend unterschiedliche Mengen an Wasser oder wässriger alkalischer Lösung zugegeben und die verdünnten Emulsionen wurden im Klaxon-Test untersucht. Es zeigte sich, dass die Reduktion der Emulgator-Menge die Stabilität der Polymerlatices L(A) negativ beeinflusst und es rascher zu einer Koagulation kommt.

Dieser Koagulation kann jedoch durch die Zugabe alkalischer Lösungen von Na$_2$CO$_3$ mit einer Konzentration von 1 mmol/L entgegengewirkt werden. Es zeigte sich, dass durch die Zugabe einer solchen Lösung zu einem Polymerlatex in einem Verhältnis von 1:4 Gew.-Teilen Na$_2$CO$_3$-Lösung:Polymerlatex L(A) die Latexstabilität des Vergleichslatex mit größerer Emulgatormenge sogar übertroffen werden kann. Ähnliche Ergebnisse konnten mit NaHCO$_3$ und KOH erzielt werden. Die Ergebnisse sind in Tabelle 2 gezeigt.

Tabelle 2. Latex-Stabilität kleinteiliger Pfropfcopolymer-Latices

| Beispiel-Latex | Verdünnung (nach dem Pfropfschritt) | Latex-Stabilität (Klaxon-Test) [sec.] |
|---|---|---|
| V1 | --- | 7 |
| 1 | --- | 9 |
| 2 | --- | 7 |
| 3 | --- | 4 |
| 3 | Wasser Gew.-Verhältnis Probe zu Wasser 1:4 | 15 |
| 3 | wässrige Na$_2$CO$_3$-Lösung (0.1 Gew.-%) Gew.-Verhältnis Probe zu Lösung 1:4 | 19 |
| 3 | wässrige KOH-Lösung (0.1 Gew.-%) Gew.-Verhältnis Probe zu Lösung 1:4 | 18 |
| 3 | wässrige NaHCO$_3$-Lösung (0.1 Gew.-%) Gew.-Verhältnis Probe zu Lösung 1:4 | 11 |

Der erhaltene Kautschuk des vernetzten Butylacrylat-Polymer hatte einen Feststoffgehalt von 40 Gew.-%. Die Teilchengrößenverteilung war eng (Quotient Q = 0,20).

Das Pfropfcopolymer wird mittels Magnesiumsulfat-Lösung bei ca. 60° C aus der Emulsion gefällt, mit Wasser gewaschen und im warmen Luftstrom getrocknet. Dabei konnte die Magnesiumsulfat-Menge im Vergleich zu herkömmlichen Verfahren reduziert werden.

b) Herstellung der entsprechenden Formmassen

Zur Herstellung der thermoplastischen Formmassen werden die vorbeschriebenen teilchenförmigen Pfropfcopolymere in eine Hartkomponente, d.h. das SAN-Copolymer (75 : 25), eingearbeitet. Die Einarbeitung kann zum Beispiel dadurch erfolgen, dass das bzw. die teilchenförmigen Pfropfcopolymere durch Zugabe eines Elektrolyten aus der Emulsion isoliert (gefällt) wird, und anschließend, gegebenenfalls nach Trocknung, durch gemeinsames Extrudieren, Kneten oder Walzen mit der Hartkomponente (SAN) vermischt wird.

c1) Herstellung der Pfropfgrundlage C1

Zu einer Vorlage aus 0,3 pphm des wie in a1) beschrieben hergestellten Kautschuk wurden nach Zugabe von 70,66 pphm und 0,18 pphm Kaliumperoxodisulfat im Verlauf von 210 min eine Mischung aus 59,51 pphm Butylacrylat und 1,21 pphm DCPA. Parallel wurde eine Lösung von Emulgator (Natriumalkylsulfonat) in Wasser zugegeben. Die Menge an zugegebenem Emulgator wurde über die Zugabedauer variiert (210 min mit 0,36 pphm Emulgator in 16.6 pphm Wasser bzw. 136 min mit 0.23 pphm Emulgator in 10.79 pphm Wasser). Die Temperatur der Vorlage lag bei 60°C. Nach Zulaufende wurde eine Stunden nachpolymerisiert.

c2) Herstellung des Pfropfcopolymers C

Zu der in Schritt c1) erhaltenen Latexdispersion wurden 88,26 pphm Wasser und 0,11 pphm Emulgator gegeben. Ferner wurde zusätzlicher Initiator (0,16 pphm KPS in 5,61 pphm Wasser) zugegeben. Anschließend wurden 13,16 pphm Styrol zugemischt und das Gemisch unter Rühren auf 65°C erhitzt. Das Reaktionsgemisch wurde 30 min bei dieser Temperatur gehalten. Die erhaltene Dispersion wurde mit 27,33 pphm eines Gemisches aus Styrol und Acrylnitril im Verhältnis 75:25 eine weitere Stunde polymerisiert. Das erhaltene Polymerlatex L(C) wurde dann mit Wasser bzw. wässriger Natriumcarbonat-Lösung verdünnt und die Latexstabilität untersucht.

Die erhaltenen Daten zu den Latices der Versuche und Vergleichsversuche können der Tabelle 2 entnommen werden.

Tabelle 3. Latex-Stabilität kleinteiliger Pfropfcopolymer-Latices.

| Probe | Dauer der Emulgatorzugabe [min] | Verdünnung (nach dem Pfropfschritt) | Latex-Stabilität (Klaxon-Test) [sec] |
|---|---|---|---|
| V1 | | --- | 34 |
| 1 | 210 | --- | 20 |
| 2 | 136 | --- | 6 |
| 2 | 136 | wässrige Na$_2$CO$_3$-Lösung (0.1 Gew.-%) Gew.-Verhältnis Probe zu Lösung 1:9 | 11 |
| 2 | 136 | wässrige Na$_2$CO$_3$-Lösung (0.1 Gew.-%) Gew.-Verhältnis Probe zu Lösung 1:4 | 23 |
| 2 | 136 | Wasser Gew.-Verhältnis Probe zu Wasser 1:9 | 10 |
| 2 | 136 | Wasser Gew.-Verhältnis Probe zu Wasser 1:4 | 19 |

V1 stellt ein Pfropfcopolymer-Latex dar, welches nach der Polymerisationsreaktion durch die Zugabe von zusätzlichen 0,04 pphm Emulgator stabilisiert wurde. Im Vergleich hierzu wurde in den Beispielen 1 und 2 nur 92 Gew.-% bzw. 67 Gew.-% der Emulgatormenge des Beispiels V1 verwendet.

Die Ergebnisse zeigen, dass durch die Reduktion der Zugabe-Dauer an Emulgator die Stabilität des erhaltenen Polymerlatex abnimmt. Durch den erfindungsgemäßen Zusatz an Wasser bzw. wässriger Natriumcarbonat-Lösung wird eine deutliche Verbesserung der Latex-Stabilität erreicht.

Das Pfropfcopolymer wurde mittels Magnesiumsulfat-Lösung bei 95° C aus der Emulsion gefällt, mit Wasser gewaschen und im warmen Luftstrom getrocknet. Dabei konnte die Magnesiumsulfat-Menge im Vergleich zu herkömmlichen Verfahren reduziert werden.

d) Herstellung der entsprechenden Formmassen

Zur Herstellung der thermoplastischen Formmassen werden die vorbeschriebenen teilchenförmigen Pfropfpolymere in eine Hartkomponente, z.B. das SAN-Copolymer (75 : 25), eingearbeitet. Die Einarbeitung kann dadurch erfolgen, dass das bzw. die teilchenförmigen Pfropfpolymere durch Zugabe eines Elektrolyten aus der Emulsion isoliert (gefällt) wird, und anschließend, gegebenenfalls nach Trocknung, durch gemeinsames Extrudieren, Kneten oder Walzen mit der Hartkomponente (SAN) vermischt wird.

Beispiel Herstellung eines weiteren kleinteiligen Pfropfcopolymers

a1) Herstellung der Pfropfgrundlage A1

Es werden jeweils Gewichtsanteile bezogen auf die Gesamtmasse der Monomere angegeben ("pphm"). Dies bezieht sich auf die Summe, bezogen auf die Masse, der Monomere der Grund- und der Pfropfstufe. Bei Raumtemperatur wurden 86,12 pphm Wasser (demin.), 0,35 pphm Emulgator (Natriumalkylsulfonat) sowie 0,07 pphm $Na_2CO_3$ gemischt. Das Reaktionsgefäß wurde evakuiert und mit Stickstoff gespült. Anschließend wurde das Reaktionsgemisch auf 59 °C erwärmt und 0,18 pphm KPS wurden zusammen mit 5 pphm Wasser (demin.) zugegeben. Danach wurden 59,51 pphm Butylacrylat und 1,21 pphm DCPA über einen Zeitraum von 210 min zudosiert. Das Reaktionsgemisch wurde für 1 h bei 59 °C nachpolymerisiert.

a2) Herstellung des Pfropfcopolymers A

Zu der in Schritt a1) erhaltenen Latexdispersion wurden bei 61 °C eine Menge von 90,37 pphm Wasser (demin.) und 0,11 pphm Emulgator (Natriumalkylsulfonat) gegeben. Anschließend wurden 5,22 pphm Wasser (demin.) und 0,16 pphm KPS zugegeben. Es wurde zunächst über einen Zeitraum von 20 min 6,3 pphm Styrol und 2,1 pphm Acrylnitril zugegeben und für 20 min nachpolymerisiert. Anschließend wurden 24 pphm Styrol und 8 pphm Acrylnitril zugegeben und für eine Stunde nachpolymerisiert. Danach wird eine Suspension von 0.2 pphm Lowinox TBM ("hindered thiophenol", CAS No. 96-69-5) in 0.2 pphm Methanol zugegeben.
Vergleichsbeispiele V1 und V2:

V1: in Schritt a1) 0.23 pphm $NaHCO_3$ (statt 0.07 pphm $Na_2CO_3$), 0.61 pphm Emulgator; In Schritt a2) mit der Lowinox-Dispersion wird auch 0.04 pphm Emulgator zugegeben;

V2: in Schritt a1) 0.23 pphm $NaHCO_3$ (statt 0.07 pphm $Na_2CO_3$), 0.61 pphm Emulgator;

Tabelle 4 zeigt Teilchengrößen von Grund- (a1) und Pfropfstufe (a2), sowie die mittels Klaxon-Test ermittelten Latexstabilitäten. Das Weglassen der finalen EmulgatorZugabe im letzten Schritt der Pfropfstufe (V1 vs. V2) zeigt keinen besonderen Effekt.

Tabelle 4.

| Probe | Emulgator (Grundstufe) [pphm] | Teilchengr. a1)[nm] | Teilchengr. a2) [nm] | Latexstabilität Klaxon Test [s] |
|---|---|---|---|---|
| V1 | 0.61 | 74 | 88 | 8 |
| V2 | 0.61 | 74 | 87 | 8 |

Der nach Schritt a1) und a2) erhaltene Latex wurde mit verdünnter Lauge (Natriumcarbonat) bzw. Wasser verdünnt, die Ergebnisse sind in Tabelle 5 angegeben. Es zeigt sich eine deutliche Zunahme der Latexstabilität (Klaxon-Test), die über die Stabilität der Vergleichsbeispiele V1 und V2 hinausgeht.

Tabelle 5:

| Probe | Latex [g] | Verdünnungskomponente [g] | Verhältnis Latex zu Verdünnung | pH | Stabilität Klaxon-Test [s] |
|---|---|---|---|---|---|
| Verdünnung mit 0.1 wt.-% $Na_2CO_3$ (0.009 mol/l) | | | | | |

(fortgesetzt)

| Probe | Latex [g] | Verdünnungskomponente [g] | Verhältnis Latex zu Verdünnung | pH | Stabilität Klaxon-Test [s] |
|---|---|---|---|---|---|
| 1 | 49 | 1 | 49:1 | 8,6 | 5 |
| 2 | 48 | 2 | 24:1 | 8,9 | 5 |
| 3 | 45 | 5 | 9:1 | 9,7 | 6 |
| 4 | 40 | 10 | 4:1 | 10,2 | 18 |
| Verdünnung mit 0.1 wt.-% $NaHCO_3$ (0.012 mol/l) | | | | | |
| 1 | 49 | 1 | 49:1 | 8,0 | 7 |
| 2 | 48 | 2 | 24:1 | 8,2 | 6 |
| 3 | 45 | 5 | 9:1 | 8,2 | 8 |
| 4 | 40 | 10 | 4:1 | 8,4 | 16 |
| Verdünnung mit Wasser | | | | | |
| 1 | 49 | 1 | 49:1 | 7,9 | 7 |
| 2 | 48 | 2 | 24:1 | 7,9 | 6 |
| 3 | 45 | 5 | 9:1 | 7,9 | 9 |
| 4 | 40 | 10 | 4:1 | 7,9 | 22 |

Beispiel

Herstellung der Pfropfgrundlage C1

Zu einer Vorlage aus 0,3 pphm des wie in Beispiel C, a1) beschrieben hergestellten Kautschuk wurden nach Zugabe von 70,66 pphm Wasser (demin.), 0.07 pphm Kautschuklatex No. 1, 2 (aus Tabelle 5) bzw. 0.15 pphm No. 3, 4, 5 (aus Tabelle 5) bzw. 0.29 pphm No. 6, 7 (aus Tabelle 5), Natriumcarbonat und 0,18 pphm Kaliumperoxodisulfat (gelöst in 5 pphm demin. Wasser) im Verlauf von 210 min. eine Mischung aus 59,51 pphm Butylacrylat und 1,21 pphm DCPA zugegeben. Parallel wurde eine Lösung von Emulgator (Natriumalkylsulfonat) in Wasser zugegeben. Die Menge an zugegebenem Emulgator wurde über die Zugabedauer variiert (210 min mit 0,36 pphm Emulgator in 16.6 pphm Wasser, 168 min mit 0.288 pphm Emulgator in 13.28 pphm Wasser, 136 min mit 0.23 pphm Emulgator in 10.79 pphm Wasser). Die Temperatur der Vorlage lag bei 60°C. Nach Zulaufende wurde noch eine Stunden nachpolymerisiert.

c2) Herstellung des Pfropfcopolymers C

Zu der in Schritt c1) erhaltenen Latexdispersion wurden 88,26 pphm Wasser und 0,11 pphm Emulgator gegeben. Ferner wurde zusätzlicher Initiator (0,16 pphm KPS in 5,61 pphm Wasser) zugegeben. Anschließend wurden 13,16 pphm Styrol über einen Zeitraum von 60 min zudosiert, und das Gemisch unter Rühren auf 65°C erhitzt. Das Reaktionsgemisch wurde 30 min bei dieser Temperatur gehalten. Die erhaltene Dispersion wurde mit 27,33 pphm eines Gemisches aus Styrol und Acrylnitril im Verhältnis 75:25 eine weitere Stunde polymerisiert. Anschließend wurde eine Dispersion aus 0.2 pphm Lowinox TBM (CAS No. 96-69-5) und 0.2 pphm Methanol zugegeben.
Die Ergebnisse in Tabelle 6 zeigen, dass die Latexstabilität mit der Zulaufzeit abnimmt.

Tabelle 6:

| Probe | Rel. Emulgatormenge | Emulgator Zulaufzeit | Teilchengr. (Pfropf) | Latexmenge | pH | Stabilität Klaxon-Test |
|---|---|---|---|---|---|---|
| | [%] | [min] | [nm] | [g] | | [sec] |
| $Na_2CO_3$/KPS ratio 0.99 | | | | | | |
| 1 | 100 | 210 | 491 | 50 | 7.28 | 26 |
| 2 | 65 | 136 | 469 | 50 | 7.64 | 21 |

(fortgesetzt)

| Probe | Rel. Emulgatormenge | Emulgator Zulaufzeit | Teilchengr. (Pfropf) | Latexmenge | pH | Stabilität Klaxon-Test |
|---|---|---|---|---|---|---|
| *Na$_2$CO$_3$/KPS ratio 2.1* | | | | | | |
| 3 | 100 | 210 | 498 | 50 | 8.77 | 25 |
| 4 | 80 | 168 | 500 | 50 | 8.72 | 22 |
| 5 | 65 | 136 | 491 | 50 | 8.52 | 21 |
| *Na$_2$CO$_3$/KPS ratio 4.1* | | | | | | |
| 6 | 100 | 210 | 483 | 50 | 8.59 | 31 |
| 7 | 65 | 136 | 504 | 50 | 8.59 | 23 |

Ein Latex (Nr. 5, Tabelle 6), der gemäß c1) und c2) mit reduzierter Emulgator-Menge (65 % bezogen auf die Betriebsrezeptur) hergestellt wurde, kann durch Verdünnung mit Natriumcarbonat (Nr. 1, Tabelle 7), Natriumhydrogencarbonat (Nr. 2, Tabelle 7) und Wasser (Nr. 3, Tabelle 7) in seiner Latexstabilität gesteigert werden.

Bei einer Verdünnung im Verhältnis 4:1 (Latex:Verdünnung) wird die Stabilität des ursprünglichen Latex noch übertroffen.

Ein ähnliches Bild wird mit Latex Nr. 7 (Tabelle 6) erhalten, die Ergebnisse sind in Tabelle 8 angegeben. Auch hier kann die Latexstabilität durch Verdünnen mit Lauge bzw. Wasser gesteigert werden.

Tabelle 7: Verdünnung von Latex Nr. 5 (Tabelle 6), Na2CO3/KPS Verhältnis 2.1

| No. | Latex-Menge [g] | Verdünner-Menge [g] | Verdünnung | pH | Latex-Stabilität [sec] |
|---|---|---|---|---|---|
| 1 | 40 | 10 | Natriumcarbonat (0.1 wt.-%) | 10.13 | 23 |
| 2 | 40 | 10 | Natriumhydrogencarbonat (0.1 wt.-%) | 8.67 | 24 |
| 3 | 40 | 10 | Wasser | 8.5 | 24 |

Tabelle 8: Verdünnung von Latex Nr. 7 (Tabelle 6), Na2CO3/KPS Verhältnis 4.1

| Probe | Latexmenge [g] | Verdünner-Menge [g] | Verdünnung | pH | Latex-Stabilität [sec] |
|---|---|---|---|---|---|
| 1 | 40 | 10 | Natriumcarbonat (0.1 wt.- %) | 9.67 | 26 |
| 2 | 40 | 10 | Natriumhydrogencarbonat (0.1 wt.-%) | 8.63 | 26 |
| 3 | 40 | 10 | Wasser | | 24 |

**Patentansprüche**

1. Verfahren zur Herstellung einer thermoplastischen Formmasse enthaltend:

10 bis 40 Gew.-% mindestens eines Pfropfcopolymers A, enthaltend:

50 bis 70 Gew.-%, bezogen auf A, einer Pfropfgrundlage A1 aus einem elastomeren, vernetzten Acrylester-Polymer und
30 bis 50 Gew.-%, bezogen auf A, einer Pfropfhülle A2 aus einem vinylaromatischen Monomer und einem polaren, copolymerisierbaren, ethylenisch ungesättigten Monomeren, im Gewichtsverhältnis 80 : 20 bis 65 : 35;

50 bis 90 Gew.-% einer Hartmatrix B aus einem oder mehreren Copolymeren von Styrol, $\alpha$-Methylstyrol, Acryl-

nitril, Methylmethacrylat und/oder Phenylmaleinimid;
0 bis 40 Gew.-% mindestens eines weiteren, zum Pfropfcopolymer A unterschiedlichen Pfropfcopolymers C mit einem mittleren Teilchendurchmesser (Gewichtsmittel) im Bereich von 200 bis 800 nm, enthaltend:

50 bis 80 Gew.-%, bezogen auf C, eines von A1 verschiedenen, elastomeren, vernetzten Acrylester-Polymers C1,
2,5 bis 25 Gew.-%, bezogen auf C, einer ersten Pfropfhülle C2 aus einem vinylaromatischen Monomeren und
10 bis 45 Gew.-%, bezogen auf C, einer zweiten Pfropfhülle C3 aus einer Mischung aus einem vinylaromatischen Monomeren C31 und einem polaren, copolymerisierbaren, ethylenisch ungesättigten Monomeren C32 im Gewichtsverhältnis von C31 zu C32 von 90 : 10 bis 60 : 40; und

0 bis 15 Gew.-% eines oder mehrerer Additive D,
wobei die Summe aus A und B, und ggf. C und D, 100 Gew.-% ergibt, und
wobei die Reaktion zur Herstellung des Pfropfcopolymers A und die Reaktion zur Herstellung des Pfropfcopolymers C in Gegenwart einer 0,01 bis 4-fach molaren Menge an Natriumcarbonat, bezogen auf die Summe der bei der Herstellung der Pfropfgrundlage und Pfropfhülle eingesetzten molaren Menge an Initiator, insbesondere KPS (Kaliumperoxodisulfat), durchgeführt wird; und
wobei die Reaktion zur Herstellung des Pfropfcopolymers A und die Reaktion zur Herstellung des Pfropfcopolymers C in Gegenwart von 0,1 bis 1 Gew.-% eines Emulgators, insbesondere eines Alkalimetall-Alkylsulfonats, bezogen auf die Menge der jeweils eingesetzten Monomere, durchgeführt wird; und
wobei dem Reaktionsgemisch zur Herstellung des Pfropfcopolymers A und des Pfropfcopolymers C während der Polymerisationsreaktion, während der Nachpolymerisation und/oder nach der Polymerisationsreaktion Wasser oder eine wässrige alkalische Lösung zugegeben wird.

2. Verfahren zur Herstellung einer thermoplastischen Formmasse nach Anspruch 1, wobei Wasser oder eine wässrige alkalische Lösung zugegeben wird, nachdem die Monomerzugabe beendet ist.

3. Verfahren zur Herstellung einer thermoplastischen Formmasse nach Anspruch 1 oder 2, wobei Wasser oder eine wässrige alkalische Lösung in einer Menge von 1 bis 50 Gew.-%, bezogen auf den aus der Emulsionspolymerisationsreaktion der Pfropfgrundlage A1 erhaltenen Polymerlatex L(A1) bzw. den aus der Emulsionspolymerisationsreaktion der Pfropfgrundlage C1 erhaltenen Polymerlatex L(C1), zugegeben wird.

4. Verfahren zur Herstellung einer thermoplastischen Formmasse nach einem der Ansprüche 1 bis 3, wobei die die wässrige alkalische Lösung eine wässrige Lösung von anorganischen Carbonaten, Hydrogencarbonaten oder Hydroxiden, sowie Gemischen davon, ist.

5. Verfahren zur Herstellung einer thermoplastischen Formmasse nach einem der Ansprüche 1 bis 4, wobei die wässrige alkalische Lösung eine wässrige Lösung von $Na_2CO_3$, $NaHCO_3$, NaOH und/oder KOH mit einer Konzentration von 0,01 bis 1 Gew.-% ist.

6. Verfahren zur Herstellung einer thermoplastischen Formmasse nach einem der Ansprüche 1 bis 5, wobei als Emulgator ein sekundäres Alkylsulfonat eingesetzt wird.

7. Verfahren zur Herstellung einer thermoplastischen Formmasse nach einem der Ansprüche 1 bis 6, wobei die Pfropfgrundlage A1 aus 55 bis 65 Gew.-%, bezogen auf A, aus Acrylat-Polymer-Partikeln mit einer mittleren Teilchengröße von 50 bis 120 nm, und die Pfropfhülle A2 aus 35 bis 45 Gew.-%, bezogen auf A, aus Styrol und Acrylnitril besteht.

8. Verfahren zur Herstellung einer thermoplastischen Formmasse nach einem der Ansprüche 1 bis 7, wobei der Quotient $Q = (d_{90}-d_{10}) / d_{50}$ der Teilchengrößenverteilung der Pfropfgrundlage A1 von 0,01 bis 0,5, insbesondere von 0,1 bis 0,4 beträgt.

9. Verfahren zur Herstellung einer thermoplastischen Formmasse gemäß einem der Ansprüche 1 bis 8, wobei die mittlere Teilchengröße der Partikel der Komponente A nach der Pfropf-Reaktion im Bereich von 70 bis 150 nm liegt.

10. Verfahren zur Herstellung einer thermoplastischen Formmasse nach einem der Ansprüche 1 bis 9, wobei das Natriumcarbonat bei der Herstellung der Pfropfcopolymere A und/oder C in einer Menge von 0,01 bis 2,5 Mol, insbesondere 0,1 bis 2,5 Mol, bezogen auf die Summe der molaren Mengen der in der Pfropfgrundlage und Pfropfhülle eingesetzten Menge an Initiator, insbesondere KPS, verwendet wird.

EP 3 356 423 B1

**11.** Verfahren zur Herstellung einer thermoplastischen Formmasse nach einem der Ansprüche 1 bis 10, wobei die Formmasse 1 bis 40 Gew.-% mindestens eines zum Pfropfcopolymer A unterschiedlichen Pfropfcopolymers C enthält.

**12.** Verfahren zur Herstellung einer thermoplastischen Formmasse enthaltend:

50 bis 90 Gew.-% einer Hartmatrix B aus einem oder mehreren Copolymeren von Styrol, $\alpha$-Methylstyrol, Acrylnitril, Methylmethacrylat und/oder Phenylmaleinimid;
10 bis 50 Gew.-% mindestens eines Pfropfcopolymers C mit einer mittleren Teilchengröße (Gewichtsmittel) im Bereich von 200 bis 800 nm, enthaltend:

50 bis 80 Gew.-%, bezogen auf C, eines elastomeren vernetzten Acrylester-Polymers C1,
2,5 bis 25 Gew.-%, bezogen auf C, einer ersten Pfropfhülle C2 aus einem vinylaromatischen Monomeren und
10 bis 45 Gew.-%, bezogen auf C, einer zweiten Pfropfhülle C3 aus einer Mischung aus einem vinylaromatischen Monomeren C31 und einem polaren, copolymerisierbaren, ethylenisch ungesättigten Monomeren C32, im Gewichtsverhältnis von C31 zu C32 von 90 : 10 bis 60 : 40; und

0 bis 15 Gew.-%, insbesondere 0,1 bis 5 Gew.-%, eines oder mehrerer Additive D,
wobei die Summe aus B und C, und gegebenenfalls D, 100 Gew.-% ergibt; und
wobei die Reaktion zur Herstellung des Pfropfcopolymers C in Gegenwart einer 0,01 bis 4-fach molaren Menge an Natriumcarbonat, bezogen auf die Summe der bei der Herstellung der Pfropfgrundlage und Pfropfhülle eingesetzten molaren Menge an Initiator, insbesondere KPS (Kaliumperoxodisulfat), durchgeführt wird; und
wobei die Reaktion zur Herstellung des Pfropfcopolymers C in Gegenwart von 0,1 - 1 Gew.-% eines Emulgators, insbesondere eines Alkalimetall-Alkylsulfonats, bezogen auf die Menge der jeweils eingesetzten Monomere, durchgeführt wird; und
wobei dem Reaktionsgemisch zur Herstellung des Pfropfcopolymers C während der Polymerisationsreaktion, während der Nachpolymerisation und/oder nach der Polymerisationsreaktion Wasser oder eine wässrige alkalische Lösung zugegeben wird.

**13.** Verfahren zur Herstellung einer thermoplastischen Formmasse nach Anspruch 12, wobei die Koagulat-Bildung der Pfropfhülle von Komponente C in einem Bereich zwischen 0,01 bis 0,5 Gew.-%, bezogen auf das Gesamtgewicht des Pfropfcopolymers C liegt.

**Claims**

**1.** Process for producing a thermoplastic molding composition comprising:

10% to 40% by weight of at least one graft copolymer A comprising:

50% to 70% by weight, based on A, of a graft base A1 made of an elastomeric, crosslinked acrylate polymer and
30% to 50% by weight, based on A, of a graft shell A2 made of a vinylaromatic monomer and of a polar, copolymerizable, ethylenically unsaturated monomer, in a ratio by weight of 80:20 to 65:35;

50% to 90% by weight of a hard matrix B made of one or more copolymers of styrene, $\alpha$-methylstyrene, acrylonitrile, methyl methacrylate and/or phenylmaleimide;
0% to 40% by weight of at least one further graft copolymer C which differs from the graft copolymer A and which has an average particle diameter (weight average) in the range from 200 to 800 nm, comprising:

50% to 80% by weight, based on C, of an elastomeric, crosslinked acrylate polymer C1 which differs from A1,
2.5% to 25% by weight, based on C, of a first graft shell C2 made of a vinylaromatic monomer, and
10% to 45% by weight, based on C, of a second graft shell C3 made of a mixture of a vinylaromatic monomer C31 and of a polar, copolymerizable, ethylenically unsaturated monomer C32 in a ratio by weight of C31 to C32 of 90:10 to 60:40; and

0% to 15% by weight of one or more additives D,
wherein the sum total of A and B, and optionally C and D, is 100% by weight, and

18

wherein the reaction for production of the graft copolymer A and the reaction for production of the graft copolymer C is conducted in the presence of 0.01 to 4 times the molar amount of sodium carbonate, based on the total molar amount of initiator, especially PPS (potassium peroxodisulfate), used in the production of the graft base and graft shell; and

wherein the reaction for production of the graft copolymer A and the reaction for production of the graft copolymer C is conducted in the presence of 0.1% to 1% by weight of an emulsifier, especially an alkali metal alkylsulfonate, based on the amount of the monomers used in each case; and

wherein water or an aqueous alkaline solution is added to the reaction mixture for production of the graft copolymer A and the graft copolymer C during the polymerization reaction, during the postpolymerization and/or after the polymerization reaction.

2.  Process for producing a thermoplastic molding composition according to Claim 1, wherein water or an aqueous alkaline solution is added after the addition of monomer has ended.

3.  Process for producing a thermoplastic molding composition according to Claim 1 or 2, wherein water or an aqueous alkaline solution is added in an amount of 1% to 50% by weight, based on the polymer latex L(A1) obtained from the emulsion polymerization reaction of the graft base A1 or the polymer latex L(C1) obtained from the emulsion polymerization reaction of the graft base, respectively.

4.  Process for producing a thermoplastic molding composition according to any of Claims 1 to 3, wherein the aqueous alkaline solution is an aqueous solution of inorganic carbonates, hydrogencarbonates or hydroxides, and mixtures thereof.

5.  Process for producing a thermoplastic molding composition according to any of Claims 1 to 4, wherein the aqueous alkaline solution is an aqueous solution of $Na_2CO_3$, $NaHCO_3$, NaOH and/or KOH having a concentration of 0.01% to 1% by weight.

6.  Process for producing a thermoplastic molding composition according to any of Claims 1 to 5, wherein the emulsifier used is a secondary alkylsulfonate.

7.  Process for producing a thermoplastic molding composition according to any of Claims 1 to 6, wherein the graft base A1 is composed of 55% to 65% by weight, based on A, of acrylate polymer particles having an average particle size of 50 to 120 nm and the graft shell A2 is composed of 35% to 45% by weight, based on A, of styrene and acrylonitrile.

8.  Process for producing a thermoplastic molding composition according to any of Claims 1 to 7, wherein the ratio Q = $(d_{90}-d_{10})$ / $d_{50}$ of the particle size distribution of the graft base A1 is 0.01 to 0.5, especially 0.1 to 0.4.

9.  Process for producing a thermoplastic molding composition according to any of Claims 1 to 8, wherein the average particle size of the particles of component A after the graft reaction is in the range from 70 to 150 nm.

10. Process for producing a thermoplastic molding composition according to any of Claims 1 to 9, wherein the sodium carbonate is used in the production of the graft copolymers A and/or C in an amount of 0.01 to 2.5 mol, especially 0.1 to 2.5 mol, based on the sum total of the molar amounts of the amount of initiator, especially PPS, used in the graft base and graft shell.

11. Process for producing a thermoplastic molding composition according to any of Claims 1 to 10, wherein the molding composition comprises 1% to 40% by weight of at least one graft copolymer C which differs from the graft copolymer A.

12. Process for producing a thermoplastic molding composition comprising:

50% to 90% by weight of a hard matrix B made of one or more copolymers of styrene, $\alpha$-methylstyrene, acrylonitrile, methyl methacrylate and/or phenylmaleimide;
10% to 50% by weight of at least one graft copolymer C with an average particle size (weight average) in the range from 200 to 800 nm, comprising:

50% to 80% by weight, based on C, of an elastomeric, crosslinked acrylate polymer C1,
2.5% to 25% by weight, based on C, of a first graft shell C2 made of a vinylaromatic monomer, and

10% to 45% by weight, based on C, of a second graft shell C3 made of a mixture of a vinylaromatic monomer C31 and of a polar, copolymerizable, ethylenically unsaturated monomer C32, in a ratio by weight of C31 to C32 of 90:10 to 60:40; and

0% to 15% by weight, especially 0.1% to 5% by weight, of one or more additives D,
wherein the sum total of B and C, and optionally D, is 100% by weight; and
wherein the reaction for production of the graft copolymer C is conducted in the presence of 0.01 to 4 times the molar amount of sodium carbonate, based on the total molar amount of initiator, especially PPS (potassium peroxodisulfate), used in the production of the graft base and graft shell; and
wherein the reaction for production of the graft copolymer C is conducted in the presence of 0.1%-1% by weight of an emulsifier, especially an alkali metal alkylsulfonate, based on the amount of the monomers used in each case; and
wherein water or an aqueous alkaline solution is added to the reaction mixture for production of the graft copolymer C during the polymerization reaction, during the postpolymerization and/or after the polymerization reaction.

**13.** Process for producing a thermoplastic molding composition according to Claim 12, wherein the coagulate formation of the graft shell of component C is in a range from 0.01% to 0.5% by weight, based on the total weight of the graft copolymer C.

**Revendications**

**1.** Procédé pour la production d'une matière à mouler thermoplastique contenant :

10 à 40 % en poids d'au moins un copolymère greffé A, contenant :

50 à 70 % en poids, par rapport à A, d'une base de greffage A1 à base d'un polymère d'ester acrylique réticulé, élastomère et
30 à 50 % en poids, par rapport à A, d'une enveloppe de greffage A2 à base d'un monomère vinylaromatique et d'un monomère polaire à insaturation éthylénique, copolymérisable, en un rapport en poids de 80 : 20 à 65 : 35 ;

50 à 90 % en poids d'une matrice rigide B à base d'un ou de plusieurs copolymères de styrène, $\alpha$-méthylstyrène, acrylonitrile, méthacrylate de méthyle et/ou phényl-maléimide ;
0 à 40 % en poids d'au moins un copolymère greffé C supplémentaire, différent du copolymère greffé A, ayant un diamètre moyen de particule (moyenne en poids) dans la plage de 200 à 800 nm, contenant :

50 à 80 % en poids, par rapport à C, d'un polymère d'ester acrylique réticulé, élastomère C1, différent de A1,
2,5 à 25 % en poids, par rapport à C, d'une première enveloppe de greffage C2 à base d'un monomère vinylaromatique et
10 à 45 % en poids, par rapport à C, d'une seconde enveloppe de greffage C3 à base d'un mélange d'un monomère vinylaromatique C31 et d'un monomère polaire à insaturation éthylénique, copolymérisable, C32 en un rapport en poids de C31 à C32 de 90 : 10 à 60 : 40 ; et

0 à 15 % en poids d'un ou de plusieurs additifs D,
la somme de A et B, et éventuellement C et D, étant égale à 100 % en poids, et
dans lequel on effectue la réaction pour la préparation du copolymère greffé A et la réaction pour la préparation du copolymère greffé C en présence d'une quantité 0,01 à 4 fois molaire de carbonate de sodium, par rapport à la somme de la quantité molaire d'amorceur, en particulier de KPS (peroxodisulfate de potassium), utilisée dans la préparation de la base de greffage et de l'enveloppe de greffage ; et
dans lequel on effectue la réaction pour la préparation du copolymère greffé A et la réaction pour la préparation du copolymère greffé C en présence de 0,1 à 1 % en poids d'un émulsifiant, en particulier d'un alkylsulfonate de métal alcalin, par rapport à la quantité des monomères utilisés dans chaque cas ; et
dans lequel on ajoute au mélange réactionnel pour la préparation du copolymère greffé A et du copolymère greffé C, pendant la réaction de polymérisation, pendant la post-polymérisation et/ou après la réaction de polymérisation, de l'eau ou une solution aqueuse alcaline.

EP 3 356 423 B1

**2.** Procédé pour la production d'une matière à mouler thermoplastique selon la revendication 1, dans lequel on ajoute de l'eau ou une solution aqueuse alcaline après que l'addition des monomères est terminée.

**3.** Procédé pour la production d'une matière à mouler thermoplastique selon la revendication 1 ou 2, dans lequel on ajoute de l'eau ou une solution aqueuse alcaline en une quantité de 1 à 50 % en poids, par rapport au latex de polymère L(A1) obtenu dans la réaction de polymérisation en émulsion de la base de greffage A1 ou au latex de polymère L(C1) obtenu dans la réaction de polymérisation en émulsion de la base de greffage C1.

**4.** Procédé pour la production d'une matière à mouler thermoplastique selon l'une quelconque des revendications 1 à 3, dans lequel la solution aqueuse alcaline est une solution aqueuse de carbonates, hydrogénocarbonates ou hydroxydes inorganiques, ainsi que de mélanges de ceux-ci.

**5.** Procédé pour la production d'une matière à mouler thermoplastique selon l'une quelconque des revendications 1 à 4, dans lequel la solution aqueuse alcaline est une solution aqueuse de $Na_2CO_3$, $NaHCO_3$, NaOH et/ou KOH à une concentration de 0,01 à 1 % en poids.

**6.** Procédé pour la production d'une matière à mouler thermoplastique selon l'une quelconque des revendications 1 à 5, dans lequel on utilise en tant qu'émulsifiant un alkylsulfonate secondaire.

**7.** Procédé pour la production d'une matière à mouler thermoplastique selon l'une quelconque des revendications 1 à 6, dans lequel la base de greffage A1 est constituée de 55 à 65 % en poids, par rapport à A, de particules de polymère d'acrylate ayant une taille moyenne de particule de 50 à 120 nm, et l'enveloppe de greffage A2 est constituée de 35 à 45 % en poids, par rapport à A, de styrène et d'acrylonitrile.

**8.** Procédé pour la production d'une matière à mouler thermoplastique selon l'une quelconque des revendications 1 à 7, dans lequel le quotient $Q = (d_{90}-d_{10}) / d_{50}$ de la distribution de tailles de particules de la base de greffage A1 vaut de 0,01 à 0,5, en particulier vaut de 0,1 à 0,4.

**9.** Procédé pour la production d'une matière à mouler thermoplastique selon l'une quelconque des revendications 1 à 8, dans lequel la taille moyenne de particule des particules du composant A après la réaction de greffage se situe dans la plage de 70 à 150 nm.

**10.** Procédé pour la production d'une matière à mouler thermoplastique selon l'une quelconque des revendications 1 à 9, dans lequel on utilise le carbonate de sodium dans la préparation des copolymères greffés A et/ou C en une quantité de 0,01 à 2,5 moles, en particulier 0,1 à 2,5 moles, par rapport à la somme des quantités molaires de la quantité d'amorceur, en particulier de KPS, utilisée dans la base de greffage et l'enveloppe de greffage.

**11.** Procédé pour la production d'une matière à mouler thermoplastique selon l'une quelconque des revendications 1 à 10, dans lequel la matière à mouler contient 1 à 40 % en poids d'au moins un copolymère greffé C différent du copolymère greffé A.

**12.** Procédé pour la production d'une matière à mouler thermoplastique contenant :

50 à 90 % en poids d'une matrice rigide B à base d'un ou de plusieurs copolymères de styrène, $\alpha$-méthylstyrène, acrylonitrile, méthacrylate de méthyle et/ou phényl-maléimide ;
10 à 50 % en poids d'au moins un copolymère greffé C ayant une taille moyenne de particule (moyenne en poids) dans la plage de 200 à 800 nm, contenant :

50 à 80 % en poids, par rapport à C, d'un polymère d'ester acrylique réticulé, élastomère C1,
2,5 à 25 % en poids, par rapport à C, d'une première enveloppe de greffage C2 à base d'un monomère vinylaromatique et
10 à 45 % en poids, par rapport à C, d'une seconde enveloppe de greffage C3 à base d'un mélange d'un monomère vinylaromatique C31 et d'un monomère polaire à insaturation éthylénique, copolymérisable, C32, en un rapport en poids de C31 à C32 de 90 : 10 à 60 : 40 ; et

0 à 15 % en poids, en particulier 0,1 à 5 % en poids, d'un ou de plusieurs additifs D,
la somme de B et C, et éventuellement D, étant égale à 100 % en poids ; et
dans lequel on effectue la réaction pour la préparation du copolymère greffé C en présence d'une quantité 0,01

21

à 4 fois molaire de carbonate de sodium, par rapport à la somme de la quantité molaire d'amorceur, en particulier de KPS (peroxodisulfate de potassium), utilisée dans la préparation de la base de greffage et de l'enveloppe de greffage ; et

dans lequel on effectue la réaction pour la préparation du copolymère greffé C en présence de 0,1 - 1 % en poids d'un émulsifiant, en particulier d'un alkylsulfonate de métal alcalin, par rapport à la quantité des monomères utilisés dans chaque cas ; et

dans lequel on ajoute au mélange réactionnel pour la préparation du copolymère greffé C, pendant la réaction de polymérisation, pendant la post-polymérisation et/ou après la réaction de polymérisation, de l'eau ou une solution aqueuse alcaline.

13. Procédé pour la production d'une matière à mouler thermoplastique selon la revendication 12, dans lequel la formation de coagulat de l'enveloppe de greffage du composant C se situe dans une plage comprise entre 0,01 et 0,5 % en poids, par rapport au poids total du copolymère greffé C.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8440764 B
- EP 0450485 A
- DE 19503545
- DE 3149358
- US 20110275763 A
- WO 2007142473 A
- US 4634734 A
- US 6177517 B
- DE 102008009390 A
- DE 1260935
- DE 1911882
- EP 0363608 A

**In der Beschreibung aufgeführte Nicht-Patentliteratur**

- Kunststoff-Handbuch. Carl-Hanser-Verlag, 1969, 124
- **PALMA et al.** *Indian J. Chem. Technol.,* 2007, vol. 14 (5), 515
- **ZUBITUR et al.** *Polymer,* 2001, vol. 42 (14), 5979
- Measurement of Particle Size Distribution of Polymer Latexes. **W. WOHLLEBEN ; H. SCHUCH.** Hydrodynamische Chromatografie. 2010, 130-153
- **M. SCHNEIDER ; T. F. MCKENNA.** Comparative Study of Methods for the Measurement of Particle Size and Size Distribution of Polymeric Emulsions. *Part. Syst. Charact.,* 2002, vol. 19, 28-37
- **H. LANGE.** Bestimmung von Teilchengröße aus Trübung und Brechungsinkrement. *Kolloid-Zeitschrift und Zeitschrift für Polymere,* Marz 1968, vol. 223 (1), 24-30
- *Journal of Applied Polymer Science,* 1965, vol. 9, 2929-2938
- **BEISPIEL R. GÄCHTER ; H. MÜLLER.** Taschenbuch der Kunststoffadditive. Carl Hanser Verlag, 1983, 494-510
- **G. BENZING ; EXPERT-VERLAG.** Pigmente für Anstrichmittel. 1988, 78ff
- **H. LANGE.** Bestimmung von Teilchengröße aus Trübung und Brechungsinkrement. *Kolloid-Zeitschrift und Zeitschrift für Polymere,* Marz 1968, vol. 223 (1), 24-30
- *CHEMICAL ABSTRACTS,* 96-69-5